(19) Europäisches Patentamt
European Patent Office
Office européen des brevets

(11) EP 4 525 335 A1

(12) **EUROPEAN PATENT APPLICATION**
published in accordance with Art. 153(4) EPC

(43) Date of publication:
**19.03.2025 Bulletin 2025/12**

(21) Application number: **23815027.0**

(22) Date of filing: **23.05.2023**

(51) International Patent Classification (IPC):
***H04L 1/00*** *(2006.01)*

(52) Cooperative Patent Classification (CPC):
**H04L 1/00**

(86) International application number:
**PCT/CN2023/095798**

(87) International publication number:
**WO 2023/231843 (07.12.2023 Gazette 2023/49)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **31.05.2022 CN 202210609783**

(71) Applicant: **Huawei Technologies Co., Ltd.**
**Shenzhen, Guangdong 518129 (CN)**

(72) Inventors:
- **XU, Chen**
  **Shenzhen, Guangdong 518129 (CN)**
- **ZHANG, Gongzheng**
  **Shenzhen, Guangdong 518129 (CN)**
- **WANG, Jian**
  **Shenzhen, Guangdong 518129 (CN)**
- **DAI, Shengchen**
  **Shenzhen, Guangdong 518129 (CN)**
- **LI, Rong**
  **Shenzhen, Guangdong 518129 (CN)**

(74) Representative: **Isarpatent**
**Patent- und Rechtsanwälte**
**Barth Hassa Peckmann & Partner mbB**
**Friedrichstraße 31**
**80801 München (DE)**

# (54) SIGNAL PROCESSING METHOD AND APPARATUS

(57) This application provides a signal processing method and an apparatus. The method is applied to a transmitting end. The method includes: obtaining a result of first preprocessing, where the first preprocessing is converting to-be-sent information from a finite field to a complex number field; performing rate matching processing on the result of the first preprocessing via a first neural network, to obtain a first modulation symbol; and sending a first signal, where the first signal is obtained by performing resource mapping on the first modulation symbol. It can be learned that the transmitting end performs rate matching processing of the complex number field on the result of the first preprocessing via the first neural network, to improve spectral efficiency of a system.

Signal processing method 100
Transmitting end
Receiving end
S101: Obtain a result of first preprocessing, where the first preprocessing is converting to-be-sent information from a finite field to a complex number field
S102: Perform rate matching processing on the result of the first preprocessing via a first neural network, to obtain a first modulation symbol
S103: First signal, where the first signal is obtained by performing resource mapping on the first modulation symbol
S104: Perform resource demapping on the first signal, to obtain a third modulation symbol
S105: Perform de-rate matching processing on the third modulation symbol via a second neural network, to obtain an output of the second neural network
S106: Perform second preprocessing on the output of the second neural network, to obtain to-be-decoded information
FIG. 4

EP 4 525 335 A1

## Description

This application claims priority to Chinese Patent Application No. 202210609783.8, filed with the China National Intellectual Property Administration on May 31, 2022 and entitled "SIGNAL PROCESSING METHOD AND APPARATUS", which is incorporated herein by reference in its entirety.

## TECHNICAL FIELD

This application relates to the field of communication technologies, and in particular, to a signal processing method and an apparatus.

## BACKGROUND

Rate matching processing means that a transmitting end processes to-be-sent bitstreams of different lengths, to match the lengths of the to-be-sent bitstreams with a bearer capability of a physical channel.

Currently, in a wireless communication system, after performing channel coding on to-be-sent information, the transmitting end obtains coded information, performs rate matching processing on the coded information, and then performs symbol modulation and resource mapping on a signal obtained through the rate matching processing, to obtain a to-be-sent signal. Correspondingly, after performing resource demapping and demodulation on a received signal, a receiving end performs de-rate matching processing on information obtained through the demodulation, and then performs channel decoding on a signal obtained through the de-rate matching processing, to obtain estimated information.

It can be learned that the transmitting end performs rate matching processing on the coded information obtained through the channel coding. In the manner, a loss of system performance is caused. For example, spectral efficiency of the system is reduced.

## SUMMARY

Embodiments of this application provide a signal processing method and an apparatus, to improve spectral efficiency of a system.

According to a first aspect, an embodiment of this application provides a signal processing method, which may be applied to a transmitting end (for example, a device or a chip of the transmitting end). The method includes: obtaining a result of first preprocessing, where the first preprocessing is converting to-be-sent information from a finite field to a complex number field; performing rate matching processing on the result of the first preprocessing via a first neural network, to obtain a first modulation symbol; and sending a first signal, where the first signal is obtained by performing resource mapping on the first modulation symbol.

It can be learned that in this embodiment of this application, the transmitting end applies the first neural network to the rate matching processing, that is, performs rate matching processing that is based on the complex number field (for example, based on a symbol level) on the result of the first preprocessing via the first neural network, to improve spectral efficiency of a system.

In an optional implementation, the performing rate matching processing on the result of the first preprocessing via a first neural network, to obtain a first modulation symbol includes: performing rate matching processing on the result of the first preprocessing based on a first parameter via the first neural network, to obtain the first modulation symbol. The first parameter includes one or more of the spectral efficiency, a channel capacity, a code rate, a signal-to-noise ratio, a code error rate, a signal to interference plus noise ratio, and a block error rate.

It can be learned that when performing rate matching processing on the result of the first preprocessing via the first neural network, the transmitting end further considers impact of one or more of the spectral efficiency, the channel capacity, the code rate, the signal-to-noise ratio, the code error rate, the signal to interference plus noise ratio, and the block error rate in the communication system on the rate matching processing, in other words, considers impact of a performance parameter in the communication system on the rate matching processing, to further improve the spectral efficiency of the system.

In an optional implementation, the transmitting end may further receive indication information of a first gradient, and update the first neural network based on the first gradient. The indication information of the first gradient indicates the first gradient, the first gradient is determined based on a first loss function, the first loss function is determined based on an output of a second neural network and a label of the first signal, and the second neural network is used to perform de-rate matching processing on a signal obtained by performing resource demapping on the first signal. The label of the first signal may be an original bitstream for generating the first signal.

It can be learned that the transmitting end may further update the first neural network based on the first gradient determined by a receiving end, to train or update the first neural network.

In an optional implementation, if the transmitting end performs channel coding in a binary field, the finite field is the binary field, and the to-be-sent information is a bitstream. Therefore, the first preprocessing in the manner is converting a to-be-sent bitstream from the binary field to the complex number field.

In an optional implementation, the first preprocessing may be converting the to-be-sent bitstream into a modulation symbol stream. In other words, the first preprocessing may be performing symbol modulation on the to-be-sent bitstream to obtain a modulation symbol.

In an optional implementation, the result of the first preprocessing is obtained by preprocessing a coded bitstream, so that the first preprocessing may be converting the coded bitstream from the binary field to the complex number field. In addition, the coded bitstream is obtained by performing channel coding on the to-be-sent information via a third neural network. In other words, the transmitting end may perform channel coding on the to-be-sent information by using the third neural network, to obtain the coded bitstream. In a manner in which the transmitting end performs channel coding by using the third neural network, system performance can be improved.

In an optional implementation, the result of the first preprocessing is obtained by preprocessing the coded bitstream via a fourth neural network, that is, the first preprocessing may be converting the coded bitstream from the binary field to the complex number field via the fourth neural network. In a manner in which the transmitting end preprocesses the coded bitstream by using the fourth neural network, the system performance can also be improved.

In an optional implementation, before the performing rate matching processing on the result of the first preprocessing via a first neural network, to obtain a first modulation symbol, the transmitting end may further perform the following operations: performing rate matching processing on a first preset training signal via a first preset neural network, to obtain a second modulation symbol; sending a second signal, where the second signal is obtained by performing resource mapping on the second modulation symbol; receiving indication information of a second gradient, where the second gradient is determined based on a second loss function, the second loss function is determined based on an output of a second preset neural network and a label of the first preset training signal, and the second preset neural network is used to perform de-rate matching processing on a signal obtained by performing resource demapping on the second signal; and updating the first preset neural network based on the second gradient, to obtain the first neural network.

The indication information of the second gradient indicates the second gradient, and the first preset neural network may be a neural network obtained by learning in advance by using a learning method like meta-learning. The first preset training signal may be a signal obtained through preprocessing such as channel coding and symbol modulation.

It can be learned that the transmitting end may further train the first preset neural network by using the first preset training signal, to obtain the first neural network used to perform rate matching processing on the result of the first preprocessing. In the training manner, the transmitting end trains, by using the preprocessed first preset training signal, the first preset neural network obtained by learning in advance, so that training time of the first preset neural network can be shortened, to be applicable to a rapidly changing fading channel.

In an optional implementation, when the transmitting end trains the first preset neural network by using the first preset training signal, to obtain the first neural network, a puncturing location, a shortening location, or a repetition location at which the first neural network performs rate matching processing on the result of the first preprocessing is determined based on a channel estimation result; or a puncturing location, a shortening location, or a repetition location at which the first neural network performs rate matching processing on the result of the first preprocessing is determined based on the second gradient. In the manner, impact of the channel estimation result or the second gradient is considered for a location at which the receiving end performs rate matching processing via the first neural network, to improve the spectral efficiency of the system.

In an optional implementation, the transmitting end may further send first indication information, where the first indication information indicates the puncturing location, the shortening location, or the repetition location of the rate matching processing. In the manner, the receiving end may determine, based on the puncturing location, the shortening location, or the repetition location of the rate matching processing, a puncturing padding location, a shortening padding location, or a repetition combining location of the de-rate matching processing performed via the second neural network, so that the receiving end can perform de-rate matching processing at a corresponding location via the second neural network.

In an optional implementation, when the to-be-sent information is the bitstream, the obtaining a result of first preprocessing includes: performing channel coding based on a first quantity of physical resources, a first modulation order, and a mother code length, to obtain first channel code, where the first modulation order is determined based on the first parameter; determining a second modulation order based on an information bit, a code length of the first channel code, and the first quantity of physical resources, where the information bit is determined based on the first quantity of physical resources and the first parameter; and performing symbol modulation on the first channel code based on the second modulation order, to obtain the result of the first preprocessing. The first parameter includes one or more of the spectral efficiency, the channel capacity, the code rate, the signal-to-noise ratio, the code error rate, the signal to interference plus noise ratio, and the block error rate.

According to a second aspect, this application further provides a signal processing method. The signal processing method in this aspect corresponds to the signal processing method in the first aspect. The signal processing method in this aspect (which may be applied to a device or a chip of a receiving end) is described from the receiving end. In the method, a first signal is received; resource demapping is performed on the first signal, to obtain a third modulation symbol; de-rate matching processing is performed on the third modulation symbol via a second neural network, to obtain an output of the second neural network; and second preprocessing is performed on the output of the second neural network, to obtain to-be-decoded information.

In this embodiment of this application, the receiving end applies the second neural network to the de-rate matching processing, and performs de-rate matching processing that is based on a complex number field (for example, based on a symbol level) on the third modulation symbol via the second neural network, to improve spectral efficiency of a system.

In an optional implementation, that de-rate matching processing is performed on the third modulation symbol via a second neural network, to obtain an output of the second neural network includes: performing de-rate matching processing on the third modulation symbol based on a first parameter via the second neural network, to obtain the output of the second neural network. The first parameter includes one or more of the spectral efficiency, a channel capacity, a code rate, a signal-to-noise ratio, a code error rate, a signal to interference plus noise ratio, and a block error rate.

It can be learned that when performing rate matching processing on the third modulation symbol via the second neural network, the receiving end considers impact of one or more of the spectral efficiency, the channel capacity, the code rate, the signal-to-noise ratio, the code error rate, the signal to interference plus noise ratio, and the block error rate in the communication system, to further improve the spectral efficiency of the system.

In an optional implementation, the receiving end may further perform channel decoding on the to-be-decoded information via a fifth neural network. In other words, the channel decoding in the system may be implemented via the fifth neural network. In a manner in which the receiving end performs channel decoding on the to-be-decoded information via the fifth neural network, system performance can be improved.

In an optional implementation, the to-be-decoded information is obtained by preprocessing the output of the second neural network via a sixth neural network. In other words, the second preprocessing may be that the receiving end preprocesses the output of the second neural network via the sixth neural network, to obtain the to-be-decoded information. In a manner in which the receiving end preprocesses the output of the second neural network via the sixth neural network, to obtain the to-be-decoded information, the system performance can also be improved.

In an optional implementation, a transmitting end may further perform the following operations: determining a first loss function based on the output of the second neural network and a label of the first signal; determining a first gradient based on the first loss function; updating the second neural network based on the first gradient; and sending indication information of the first gradient. The label of the first signal may be an original bitstream for generating the first signal. The indication information of the first gradient indicates the first gradient.

It can be learned that the transmitting end may further determine the first loss function based on the output of the second neural network and the label of the first signal, to update the second neural network based on the first gradient determined based on the first loss function. In addition, the receiving end may further send the indication information of the first gradient, so that the transmitting end may also update a first neural network on a transmitting end side based on the first gradient. The manner helps the transmitting end and the receiving end jointly update the first neural network and the second neural network based on the first signal.

In an optional implementation, the determining a first loss function based on the output of the second neural network and a label of the first signal includes: performing channel decoding on the output of the second neural network by using a channel decoder, to obtain an estimated bit or a decoded soft value; and determining the first loss function based on the estimated bit and the label of the first signal; or determining the first loss function based on the decoded soft value and the label of the first signal.

In an optional implementation, before receiving the first signal, the receiving end may further perform the following operations: receiving a second signal; performing, via a second preset neural network, de-rate matching processing on a signal obtained by performing resource demapping on the second signal, to obtain an output of the second preset neural network; determining a second loss function based on the output of the second preset neural network and a label of a first preset training signal; determining a second gradient based on the second loss function; updating the second preset neural network based on the second gradient, to obtain the second neural network; and sending indication information of the second gradient. The first preset neural network may be a neural network obtained by learning in advance by using a learning method like meta-learning, and the indication information of the second gradient indicates the second gradient.

It can be learned that the receiving end may further train the second preset neural network based on the received second signal, to obtain the second neural network used to perform de-rate matching processing on the third modulation symbol. In the training manner, the receiving end trains, by using the received second signal, the second preset neural network obtained by learning in advance, so that training time of the second preset neural network can be shortened, and therefore the training manner is applicable to a rapidly changing fading channel.

In an optional implementation, the receiving end may further perform the following operations: receiving first indication information, where the first indication information indicates a puncturing location, a shortening location, or a repetition location of rate matching processing; and determining, based on the first indication information, a puncturing padding location, a shortening padding location, or a repetition combining location of the de-rate matching processing performed via the second neural network.

It can be learned that the receiving end may further determine, based on the puncturing location, the shortening location, or the repetition location that is of the rate matching processing and that is indicated by the transmitting end, the puncturing padding location, the shortening padding location, or the repetition combining location of the de-rate matching processing performed via the second neural network, to ensure that the location at which the de-rate matching processing is performed corresponds to the location at which the transmitting end performs rate matching processing.

According to a third aspect, an embodiment of this application further provides a signal processing method, which may be applied to a transmitting end (for example, a device or a chip of the transmitting end). The method includes: performing rate matching processing on a third signal via a seventh neural network, to obtain a fourth signal; and sending a fifth signal, where the fifth signal is obtained by performing signal processing on the fourth signal.

The third signal may be to-be-sent information, may be coded information obtained by performing channel coding on the to-be-sent information, or may be a processing result of converting the coded information into a complex number field. The processing result may be a modulation symbol. Different third signals correspond to different signal processing of the fourth signal. When the third signal is the to-be-sent information, the fifth signal may be a signal obtained by performing channel coding, symbol modulation, and resource mapping on the fourth signal. When the third signal is the coded information, the fifth signal may be a signal obtained by performing symbol modulation and resource mapping on the fourth signal. When the third signal is the processing result, the fifth signal may be a signal obtained by performing symbol modulation and resource mapping on the fourth signal, or may be a signal obtained by performing resource mapping on the fourth signal.

It can be learned that in this embodiment of this application, the transmitting end performs rate matching processing on the third signal via the seventh neural network, to improve spectral efficiency of a system.

In an optional implementation, before the performing rate matching processing on a third signal via a seventh neural network, to obtain a fourth signal, the following operations may be further performed: performing rate matching processing on a second preset training signal via a third preset neural network, to obtain a sixth signal; sending a seventh signal, where the seventh signal is obtained by performing resource mapping on the sixth signal; receiving indication information of a third gradient, where the third gradient is determined based on a third loss function, the third loss function is determined based on an output of a fourth preset neural network and a label of the second preset training signal, and the fourth preset neural network is used to perform de-rate matching processing on a signal obtained by performing resource demapping on the seventh signal; and updating the third preset neural network based on the third gradient, to obtain the seventh neural network.

The third preset neural network and the fourth neural network are neural networks obtained by training and learning in advance by using a learning method like meta-learning. The second preset training signal may be a signal obtained through processing such as channel coding and symbol modulation. The indication information of the third gradient indicates the third gradient.

It can be learned that the transmitting end may further train the third preset neural network by using the second preset training signal, to obtain the first neural network used to perform rate matching processing on the third signal. In the manner, the transmitting end trains, by using the preprocessed second preset training signal, the third preset neural network obtained by learning in advance, so that training time of the third preset neural network can be shortened, to be applicable to a rapidly changing fading channel.

According to a fourth aspect, this application further provides a signal processing method. The signal processing method in this aspect corresponds to the signal processing method in the third aspect. The signal processing method in this aspect (which may be applied to a device or a chip of a receiving end) is described from the receiving end. In the method, a fifth signal is received; and de-rate matching processing is performed on an eighth signal via an eighth neural network, to obtain an output of the eighth neural network, where the eighth signal is obtained by performing signal processing on the fifth signal.

The eighth signal may be obtained by performing resource demapping on the fifth signal, may be obtained by sequentially performing resource demapping and demodulation on the fifth signal, or may be obtained by sequentially performing resource demapping, demodulation, and channel decoding on the fifth signal.

In this embodiment of this application, the receiving end performs de-rate matching processing on the eighth signal via the eighth neural network, to improve spectral efficiency of a system.

In an optional implementation, before the fifth signal is received, a seventh signal may be further received; de-rate matching processing is performed, via a fourth preset neural network, on a signal obtained by performing resource demapping on the seventh signal, to obtain an output of the fourth preset neural network; a third loss function is determined based on the output of the fourth preset neural network and a label of a second preset signal; a third gradient is determined based on the third loss function; the fourth preset neural network is updated based on the third gradient, to obtain the eighth neural network; and indication information of the third gradient is sent. The fourth neural network is a neural network obtained by training and learning in advance by using a learning method like meta-learning, and the indication information of the third gradient indicates the third gradient.

It can be learned that the receiving end may further train the fourth preset neural network based on the received seventh signal, to obtain the eighth neural network used for the de-rate matching. In the training manner, a transmitting end trains, by using the received seventh signal, the fourth preset neural network obtained by learning in advance, so that training time of the fourth preset neural network can be shortened, to be applicable to a rapidly changing fading channel.

According to a fifth aspect, this application further provides a communication apparatus. The communication apparatus implements some or all functions of the transmitting end in the first aspect, implements some or all functions of the receiving end in the second aspect, implements some or all functions of the transmitting end in the third aspect, or implements some or all functions of the receiving end in the fourth aspect. For example, functions of the communication apparatus may have functions in some or all embodiments of the transmitting end in the first aspect of this application, or may have a function of separately implementing any embodiment of this application. The functions may be implemented by hardware, or may be implemented by hardware executing corresponding software. The hardware or the software includes one or more units or modules corresponding to the functions.

In a possible design, a structure of the communication apparatus may include a processing unit and a communication unit. The processing unit is configured to support the communication apparatus in performing a corresponding function in the foregoing method. The communication unit is configured to support communication between the communication apparatus and another communication apparatus. The communication apparatus may further include a storage unit. The storage unit is configured to be coupled to the processing unit and the communication unit, and stores program instructions and data that are necessary for the communication apparatus.

In an implementation, the communication apparatus includes the processing unit and the communication unit.

The processing unit is configured to obtain a result of first preprocessing, where the first preprocessing is converting to-be-sent information from a finite field to a complex number field.

The processing unit is further configured to perform rate matching processing on the result of the first preprocessing via a first neural network, to obtain a first modulation symbol.

The communication unit is configured to send a first signal, where the first signal is obtained by performing resource mapping on the first modulation symbol.

In addition, for another optional implementation of the communication apparatus in this aspect, refer to related content of the first aspect. Details are not described herein again.

In another implementation, the communication apparatus includes the processing unit and the communication unit.

The communication unit is configured to receive a first signal.

The processing unit is configured to perform resource demapping on the first signal, to obtain a third modulation symbol.

The processing unit is further configured to perform de-rate matching processing on the third modulation symbol via a second neural network, to obtain an output of the second neural network.

The processing unit is further configured to perform second preprocessing on the output of the second neural network, to obtain to-be-decoded information.

In addition, for another optional implementation of the communication apparatus in this aspect, refer to related content of the second aspect. Details are not described herein again.

In still another implementation, the communication apparatus includes the processing unit and the communication unit.

The processing unit is configured to perform rate matching processing on a third signal via a seventh neural network, to obtain a fourth signal.

The communication unit is configured to send a fifth signal, where the fifth signal is obtained by performing signal processing on the fourth signal.

In addition, for another optional implementation of the communication apparatus in this aspect, refer to related content of the third aspect. Details are not described herein again.

In still another implementation, the communication apparatus includes the processing unit and the communication unit.

The communication unit is configured to receive a fifth signal.

The processing unit is configured to perform de-rate matching processing on an eighth signal via an eighth neural network, to obtain an output of the eighth neural network, where the eighth signal is obtained by performing signal processing on the fifth signal.

In addition, for another optional implementation of the communication apparatus in this aspect, refer to related content of the fourth aspect. Details are not described herein again.

In an example, the communication unit may be a transceiver or a communication interface, the storage unit may be a memory, and the processing unit may be a processor.

In an implementation, the communication apparatus includes the processor and the transceiver.

The processor is configured to obtain a result of first preprocessing, where the first preprocessing is converting to-be-sent information from a finite field to a complex number field.

The processor is further configured to perform rate matching processing on the result of the first preprocessing via a first neural network, to obtain a first modulation symbol.

The transceiver is configured to send a first signal, where the first signal is obtained by performing resource mapping on the first modulation symbol.

In addition, for another optional implementation of the uplink communication apparatus in this aspect, refer to related content of the first aspect. Details are not described herein again.

In another implementation, the communication apparatus includes the processor and the transceiver.

The transceiver is configured to receive a first signal.

The processor is configured to perform resource demapping on the first signal, to obtain a third modulation symbol.

The processor is further configured to perform de-rate matching processing on the third modulation symbol via a second neural network, to obtain an output of the second neural network.

The processor is further configured to perform second preprocessing on the output of the second neural network, to obtain to-be-decoded information.

In addition, for another optional implementation of the uplink communication apparatus in this aspect, refer to related content of the second aspect. Details are not described herein again.

In still another implementation, the communication apparatus includes the processor and the transceiver.

The processor is configured to perform rate matching processing on a third signal via a seventh neural network, to obtain a fourth signal.

The transceiver is configured to send a fifth signal, where the fifth signal is obtained by performing signal processing on the fourth signal.

In addition, for another optional implementation of the uplink communication apparatus in this aspect, refer to related content of the third aspect. Details are not described herein again.

In still another implementation, the communication apparatus includes the processor and the transceiver.

The transceiver is configured to receive a fifth signal.

The processor is configured to perform de-rate matching processing on an eighth signal via an eighth neural network, to obtain an output of the eighth neural network, where the eighth signal is obtained by performing signal processing on the fifth signal.

In addition, for another optional implementation of the uplink communication apparatus in this aspect, refer to related content of the fourth aspect. Details are not described herein again.

In another implementation, the communication apparatus is a chip or a chip system. The processing unit may also be represented as a processing circuit or a logic circuit. The transceiver unit may be an input/output interface, an interface circuit, an output circuit, an input circuit, a pin, a related circuit, or the like on the chip or the chip system.

In an implementation process, the processor may be configured to perform, for example, but not limited to, baseband-related processing, and the transceiver may be configured to perform, for example, but not limited to, radio frequency receiving and sending. The foregoing devices may be separately disposed on chips that are independent of each other, or at least some or all of the devices may be disposed on a same chip. For example, the processor may be further divided into an analog baseband processor and a digital baseband processor. The analog baseband processor and the transceiver may be integrated on a same chip, and the digital baseband processor may be disposed on an independent chip. With continuous development of integrated circuit technologies, increasingly more devices may be integrated on a same chip. For example, the digital baseband processor and a plurality of application processors (for example, but not limited to, a graphics processing unit and a multimedia processor) may be integrated on a same chip. Such a chip may be referred to as a system on a chip (system on a chip, SoC). Whether the devices are independently disposed on different chips or integrated and disposed on one or more chips usually depends on a need of a product design. This embodiment of this application imposes no limitation on implementation forms of the foregoing devices.

According to a sixth aspect, this application further provides a processor, configured to perform the foregoing methods. In a process of performing these methods, a process of sending the foregoing information and a process of receiving the foregoing information in the foregoing methods may be understood as a process of outputting the foregoing information by the processor and a process of receiving the foregoing input information by the processor. When outputting the foregoing information, the processor outputs the foregoing information to a transceiver, so that the transceiver transmits the foregoing information. After the foregoing information is output by the processor, other processing may further need to be performed on the foregoing information before the foregoing information arrives at the transceiver. Similarly, when the processor receives the foregoing input information, the transceiver receives the foregoing information, and inputs the foregoing information into the processor. Further, after the transceiver receives the foregoing information, other processing may need to be performed on the foregoing information before the foregoing information is input into the processor.

Operations such as sending and receiving related to the processor may be more generally understood as operations such as outputting and receiving or inputting of the processor, instead of operations such as sending and receiving directly performed by a radio frequency circuit and an antenna, unless otherwise specified, or provided that the operations do not contradict actual functions or internal logic of the operations in related descriptions.

In an implementation process, the processor may be a processor specially configured to perform these methods, or a processor, for example, a general-purpose processor, that executes computer instructions in a memory to perform these methods. The memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this embodiment of this application.

According to a seventh aspect, this application further provides a communication system. The system includes one or more network devices and one or more terminal devices. In another possible design, the system may further include another device that interacts with the network device and the terminal device.

According to an eighth aspect, this application provides a computer-readable storage medium, configured to store instructions. When the instructions are run by a computer, the method according to any one of the first aspect to the fourth aspect is implemented.

According to a ninth aspect, this application further provides a computer program product including instructions. When the computer program product runs on a computer, the method according to any one of the first aspect to the fourth aspect is implemented.

According to a tenth aspect, this application provides a chip system. The chip system includes a processor and an interface. The interface is configured to obtain a program or instructions. The processor is configured to invoke the program or the instructions to implement or support a transmitting end in implementing a function in the first aspect, implement or support a receiving end in implementing a function in the second aspect, implement or support the transmitting end in implementing a function in the third aspect, or implement or support the receiving end in implementing a function in the fourth aspect, for example, determining or processing at least one of data and information in the foregoing methods. In a possible design, the chip system further includes a memory. The memory is configured to store program instructions and data that are necessary for a terminal. The chip system may include a chip, or may include a chip and another discrete device.

According to an eleventh aspect, this application provides a communication apparatus, including a processor, configured to execute a computer program or executable instructions stored in a memory. When the computer program or the executable instructions are executed, the apparatus is enabled to perform the methods in the possible implementations of the first aspect, the second aspect, the third aspect, and the fourth aspect.

In a possible implementation, the processor and the memory are integrated together.

In another possible implementation, the memory is located outside the communication apparatus.

For beneficial effects of the fifth aspect to the eleventh aspect, refer to beneficial effects of the first aspect to the fourth aspect. Details are not described herein again.

## BRIEF DESCRIPTION OF DRAWINGS

FIG. 1 is a diagram of a system structure of a communication system according to an embodiment of this application;

FIG. 2 is a diagram of a type of signal processing according to an embodiment of this application;

FIG. 3 is a diagram of another type of signal processing according to an embodiment of this application;

FIG. 4 is an interaction diagram of a signal processing method according to an embodiment of this application;

FIG. 5a is a diagram of still another type of signal processing according to an embodiment of this application;

FIG. 5b is a diagram of still another type of signal processing according to an embodiment of this application;

FIG. 5c is a schematic flowchart of still another type of signal processing according to an embodiment of this application;

FIG. 6a is a diagram of still another type of signal processing according to an embodiment of this application;

FIG. 6b is a diagram of still another type of signal processing according to an embodiment of this application;

FIG. 6c is a diagram of still another type of signal processing according to an embodiment of this application;

FIG. 7 is a diagram of a system according to an embodiment of this application;

FIG. 8 is a diagram of structures of a first neural network and a second neural network according to an embodiment of this application;

FIG. 9a is a diagram of a type of neural network training according to an embodiment of this application;

FIG. 9b is a diagram of another type of neural network training according to an embodiment of this application;

FIG. 9c is a diagram of still another type of neural network training according to an embodiment of this application;

FIG. 9d is a diagram of still another type of neural network training according to an embodiment of this application;

FIG. 10 is a diagram of a structure of a resource patch according to an embodiment of this application;

FIG. 11a is a diagram of a processing procedure of a transmitting end according to an embodiment of this application;

FIG. 11b is a diagram of another processing procedure of a transmitting end according to an embodiment of this application;

FIG. 11c is a diagram of still another processing procedure of a transmitting end according to an embodiment of this application;

FIG. 12a is a line graph of a signal-to-noise ratio versus a block error rate according to an embodiment of this application;

FIG. 12b is another line graph of a signal-to-noise ratio versus a block error rate according to an embodiment of this application;

FIG. 12c is still another line graph of a signal-to-noise ratio versus a block error rate according to an embodiment of this application;

FIG. 13 is an interaction diagram of another signal processing method according to an embodiment of this application;

FIG. 14a is a diagram of still another type of signal processing according to an embodiment of this application;

FIG. 14b is a diagram of still another type of signal processing according to an embodiment of this application;

FIG. 14c is a diagram of still another type of signal processing according to an embodiment of this application;

FIG. 15 is a diagram of a structure of a communication apparatus according to an embodiment of this application;

FIG. 16 is a diagram of a structure of another communication apparatus according to an embodiment of this application; and

FIG. 17 is a diagram of a structure of a chip according to an embodiment of this application.

## DESCRIPTION OF EMBODIMENTS

The following clearly and completely describes technical solutions in embodiments of this application with reference to the accompanying drawings in embodiments of this application.

To better understand a signal processing method disclosed in embodiments of this application, a communication system to which embodiments of this application are applicable is described.

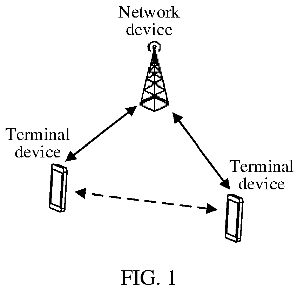

Embodiments of this application may be applied to wireless communication systems such as a 5th generation mobile communication (5th generation mobile communication, 5G) system, a 6th generation mobile communication (6th generation mobile communication, 6G) system, a satellite communication system, and a short-range communication system. A system architecture is shown in FIG. 1. The wireless communication system may include one or more network devices and one or more terminal devices. Point-to-point communication may be performed in the wireless communication system. For example, a plurality of terminal devices communicate with each other.

It may be understood that the wireless communication system mentioned in embodiments of this application includes but is not limited to a narrowband internet of things (narrowband internet of things, NB-IoT) system, a long term evolution (long term evolution, LTE) system, a 5G/6G mobile communication system in three major application scenarios: enhanced mobile broadband (enhanced mobile broadband, eMBB), ultra-reliable low-latency communication (ultra-reliable low-latency communication, URLLC), and massive machine-type communication (massive machine type of communication, mMTC), a wireless fidelity (wireless fidelity, Wi-Fi) system, a mobile communication system after 5G, or the like.

In embodiments of this application, the network device is a device having a wireless transceiver function, is configured to communicate with the terminal device, and may be an evolved NodeB (evolved NodeB, eNB or eNodeB) in LTE, a base station in a 5G/6G network, a base station in a future evolved public land mobile network (public land mobile network, PLMN), a broadband network gateway (broadband network gateway, BNG), an aggregation switch, a non-3rd generation partnership project (3rd generation partnership project, 3GPP) access device, or the like. Optionally, the network device in embodiments of this application may include base stations in various forms, for example, a macro base station, a micro base station (also referred to as a small cell), a relay station, an access point, a device for implementing a base station function in the future, an access node in a Wi-Fi system, a transmission reception point (transmitting and receiving point, TRP), a transmitting point (transmitting point, TP), a mobile switching center, and a device that undertakes a base station function in device-to-device (device-to-device, D2D), vehicle-to-everything (vehicle-to-everything, V2X), or machine-to-machine (machine-to-machine, M2M) communication. This is not specifically limited in embodiments of this application.

The network device may communicate and interact with a core network device, to provide a communication service for the terminal device. The core network device is, for example, a device in a core network (core network, CN) of the 5G network. As a bearer network, the core network provides an interface to a data network, provides communication connection, authentication, management, and policy control for the terminal, and bearers a data service.

The terminal device in embodiments of this application may include various handheld devices, vehicle-mounted devices, wearable devices, or computing devices having a wireless communication function, or other processing devices connected to a wireless modem. The terminal device may also be referred to as the terminal. The terminal device may also be user equipment (user equipment, UE), an access terminal, a subscriber unit (subscriber unit), a user agent, a cellular phone (cellular phone), a smart phone (smart phone), a wireless data card, a personal digital assistant (personal digital assistant, PDA) computer, a tablet computer, a wireless modem (modem), a handheld device (handset), a laptop computer (laptop computer), a machine type communication (machine type communication, MTC) terminal, a communication device carried on a high-altitude aircraft, a wearable device, an uncrewed aerial vehicle, a robot, a terminal in device-to-device (device-to-device, D2D) communication, a terminal in vehicle to everything (vehicle to everything, V2X), a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), a terminal device in a future communication network, or the like. This is not limited in this application.

In embodiments of this application, the terminal device may further have an artificial intelligence (artificial intelligence, AI) processing capability, and the network device may also have an AI processing capability. For example, the terminal device may have a training capability, an inference capability, and the like of a neural network.

In embodiments of this application, a transmitting end may be the foregoing network device, and a receiving end may be the foregoing terminal device. Optionally, the transmitting end may be the foregoing terminal device, and the receiving end may be the foregoing network device.

In embodiments disclosed in this application, all aspects, embodiments, or features of this application are presented by describing a system including a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In embodiments of this application, first, second, third, fourth, fifth, sixth, seventh, and eighth are named for ease of distinction in description, do not constitute a substantive limitation, and have no limitation of a sequence or the like.

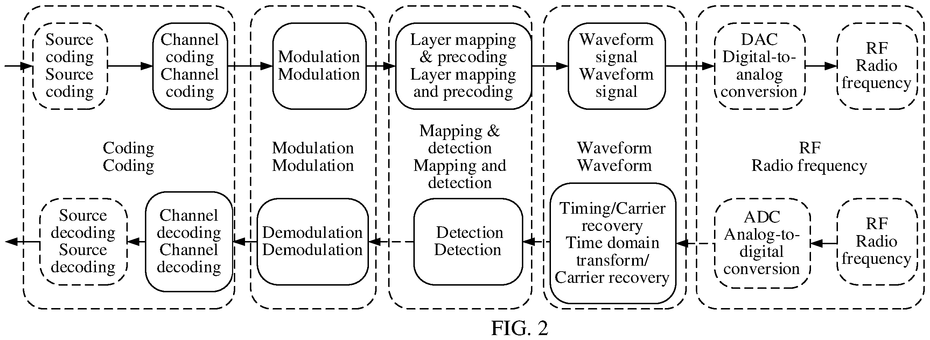

FIG. 2 is a diagram of signal processing performed by a transmitting end and a receiving end at a physical layer. A procedure of the signal processing performed by the transmitting end and the receiving end at the physical layer includes coding (coding), modulation (modulation), mapping (mapping) and detection (detection), waveform (waveform) processing, and radio frequency (radio frequency, RF) processing. For the transmitting end, the coding includes performing source coding (source coding) and channel coding (channel coding) on to-be-sent information; the modulation means performing modulation on information obtained through the channel coding; the mapping means mapping a modulated modulation symbol to a plurality of layers, that is, performing layer mapping (layer mapping) on the modulation symbol, and performing precoding (precoding) on information obtained through the layer mapping; the waveform processing means generating a waveform signal (wave signal) from a mapped signal; and the radio frequency processing means performing digital-to-analog conversion (digital and analog conversion, DAC) on the generated waveform signal, and sending, via a radio frequency transmit unit, a signal obtained through the digital-to-analog conversion.

Correspondingly, for the receiving end, the radio frequency processing includes receiving a signal via a radio frequency receive unit and performing analog-to-digital conversion (analog and digital, ADC) on the received signal; the waveform processing means performing time domain transform (timing) or carrier recovery (carrier recovery) on a signal obtained through the analog-to-digital conversion; the detection means performing detection (detection) on a signal obtained through the waveform processing; the modulation means performing demodulation (demodulation) on a detected signal; and the coding means performing channel decoding (channel decoding) and source decoding (source decoding) on a demodulated signal to obtain estimated information.

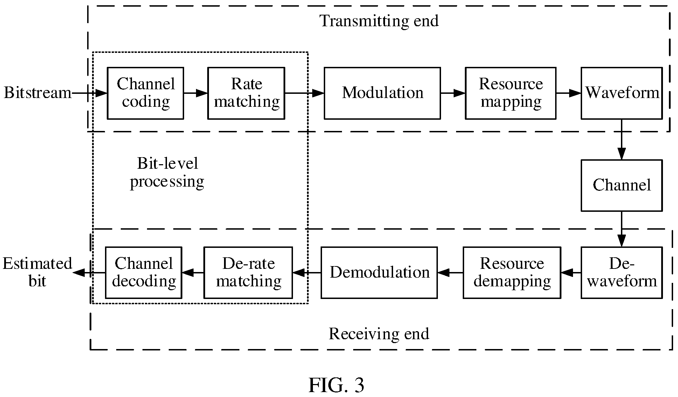

To match a to-be-sent bitstream with a bearer capability of a physical channel, the transmitting end needs to perform rate matching processing on the to-be-sent bitstream. Currently, for a diagram of performing rate matching processing by the transmitting end and performing de-rate matching processing by the receiving end when the transmitting end performs channel coding on a to-be-sent bitstream in a binary field, refer to FIG. 3. As shown in FIG. 3, the transmitting end performs channel coding on the to-be-sent bitstream, performs rate matching processing on a coded bitstream obtained through the channel coding, and then sequentially performs symbol modulation, resource mapping, and waveform generation processing on a signal obtained through the rate matching processing, to obtain a to-be-sent waveform, so as to send the to-be-sent waveform through a channel. Correspondingly, after sequentially performing de-waveform processing, resource demapping processing, and symbol demodulation processing on a received signal, the receiving end performs resource demapping processing on a demodulated signal, and then performs channel decoding on a signal obtained through de-rate matching, to obtain an estimated bit.

It can be learned that the transmitting end performs rate matching processing on the coded bitstream obtained through the channel coding, and combines the channel coding and the rate matching processing. In the manner, a loss of system performance is caused, and a large performance loss is caused especially in a fading (fading) channel.

In embodiments of this application, all signals received by the receiving end are signals passing through a channel, and the received signals include noise information. For example, if a first signal sent by the transmitting end is $x$, and channel information between the transmitting end and the receiving end is $h$, the receiving end receives a first signal $y = x \bullet h + N$, where N is the noise information.

In embodiments of this application, a finite field is a number field including a limited quantity of elements. The finite field includes but is not limited to the binary field, a ternary field, a quaternary field, and the like. In embodiments of this application, related content is described mainly by using an example in which the finite field is the binary field. A complex number field is a number field including a complex number set like a+bi under four arithmetic operations, where a and b are real numbers, and i is an imaginary unit.

For example, when the finite field is the binary field, the to-be-sent information is a bitstream. In this case, a corresponding complex number field is a modulation symbol. In other words, when the finite field is the binary field, that the transmitting end converts the to-be-sent information from the finite field to the complex number field means converting the to-be-sent bitstream into the modulation symbol.

For example, when the finite field is the ternary field, the to-be-sent information is a ternary field element stream. In this case, that the transmitting end converts the to-be-sent information from the finite field to the complex number field means converting the to-be-sent ternary field element stream into information about the complex number field.

In embodiments of this application, the to-be-sent bitstream means that the to-be-sent information of the transmitting end is the bitstream. An information bit is a parameter determined based on a quantity of available physical resources obtained by the transmitting end and one or more of spectral efficiency, a channel capacity, a code rate, a signal-to-noise ratio, a code error rate, a signal to interference plus noise ratio, and a block error rate.

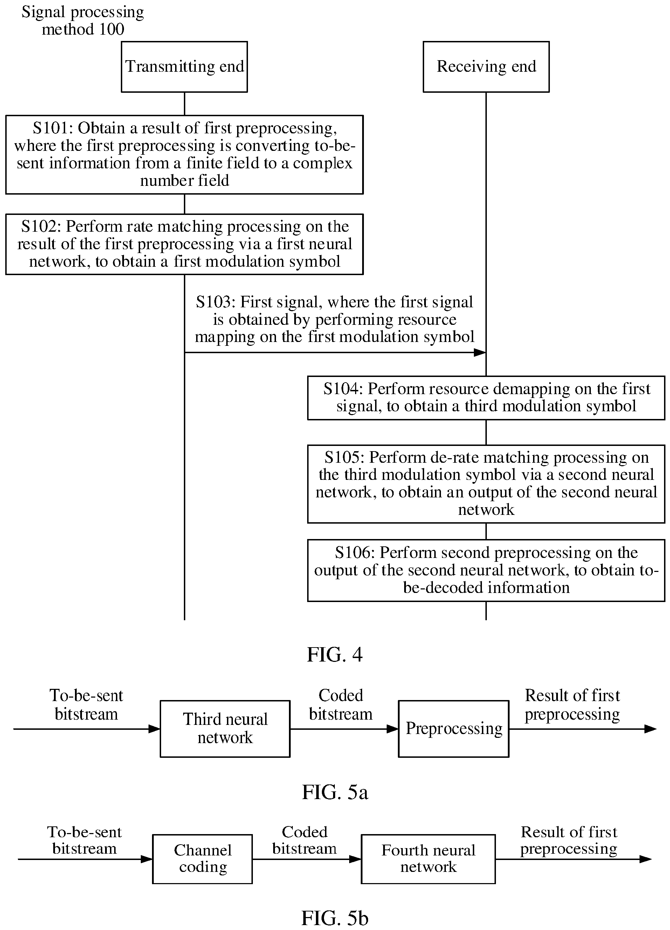

An embodiment of this application provides a signal processing method 100. FIG. 4 is an interaction diagram of the signal processing method 100. The signal processing method 100 is described from perspectives of a transmitting end and a receiving end. The signal processing method 100 includes but is not limited to the following steps.

S101: The transmitting end obtains a result of first preprocessing, where the first preprocessing is converting to-be-sent information from a finite field to a complex number field.

The to-be-sent information may also be referred to as a finite field element stream.

In an optional implementation, the finite field is a binary field, the to-be-sent information is a bitstream, and the bitstream may also be referred to as a binary field element stream. In the manner, the transmitting end performs binary field channel coding on the to-be-sent bitstream in the binary field. Therefore, that the first preprocessing is converting to-be-sent information from a finite field to a complex number field may be described as follows: The first preprocessing is converting the bitstream from the binary field to the complex number field.

Optionally, when the finite field is the binary field, and the to-be-sent information is the bitstream, that the first preprocessing is converting to-be-sent information from a finite field to a complex number field may alternatively be described as follows: The first preprocessing is converting the to-be-sent bitstream into a modulation symbol. In other words, the first preprocessing may be performing symbol modulation on the to-be-sent bitstream to obtain the modulation symbol. The modulation symbol is the result of the first preprocessing.

In an optional implementation, when the finite field is the binary field, the result of the first preprocessing is obtained by preprocessing a coded bitstream, and the coded bitstream is obtained by performing channel coding on the to-be-sent information via a third neural network. In other words, the first preprocessing may be that the transmitting end converts the coded bitstream from the binary field to the complex number field. In addition, in a manner in which the transmitting end performs channel coding on the to-be-sent bitstream via the third neural network, system performance can be improved.

For example, as shown in FIG. 5a, when the finite field is the binary field, the transmitting end performs channel coding on the to-be-sent information via the third neural network, to obtain the coded bitstream. The transmitting end preprocesses the coded bitstream to obtain the result of the first preprocessing.

In another optional implementation, when the finite field is the binary field, the result of the first preprocessing is obtained by preprocessing a coded bitstream via a fourth neural network, and the coded bitstream is obtained by performing channel coding on the to-be-sent information. In other words, the first preprocessing may be that the transmitting end converts the coded bitstream from the binary field to the complex number field via the fourth neural network.

For example, as shown in FIG. 5b, when the finite field is the binary field, the transmitting end performs channel coding on the to-be-sent bitstream to obtain the coded bitstream. The transmitting end preprocesses the coded bitstream via the fourth neural network, to obtain the result of the first preprocessing.

In still another optional implementation, when the finite field is the binary field, the result of the first preprocessing is obtained by preprocessing a coded bitstream via a fourth neural network, and the coded bitstream is obtained by performing channel coding on the to-be-sent information via a third neural network. In the manner, the transmitting end performs channel coding and preprocessing on the to-be-sent bitstream via the neural network, to improve system performance and reduce a latency.

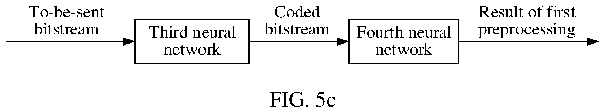

For example, as shown in FIG. 5c, when the finite field is the binary field, the transmitting end performs channel coding on the to-be-sent bitstream via the third neural network, to obtain the coded bitstream. The transmitting end preprocesses the coded bitstream via the fourth neural network, to obtain the result of the first preprocessing.

Optionally, when the finite field is a ternary field, a quaternary field, or the like, the transmitting end may also perform channel coding on the to-be-sent information via the third neural network, and preprocess, via the fourth neural network, coded information obtained through the channel coding, to obtain the result of the first preprocessing.

In an optional implementation, when the finite field is the binary field, and the transmitting end does not use the third neural network to implement the channel coding and does not use the fourth neural network to implement the symbol modulation, that the transmitting end obtains a result of first preprocessing includes: performing channel coding based on a first quantity of physical resources, a first modulation order, and a mother code length, to obtain first channel code, where the first modulation order is determined based on a first parameter; determining a second modulation order based on an information bit, a code length of the first channel code, and the first quantity of physical resources, where the information bit is determined based on the first quantity of physical resources and the first parameter; and performing symbol modulation on the first channel code based on the second modulation order, to obtain the result of the first preprocessing.

The first quantity $N_{RE}$ of physical resources is a quantity of available physical resources obtained by the transmitting end, that is, a quantity of physical resources that can be used for transmission of a signal. The first parameter may be a first parameter S predicted by the transmitting end, and the first parameter includes one or more of spectral efficiency, a channel capacity, a code rate, a signal-to-noise ratio, a code error rate, and a signal to interference plus noise ratio. The first modulation order $Q_m$ is a modulation order predicted by the transmitting end. The transmitting end determines the information bit $K$ based on the first quantity $N_{RE}$ of physical resources and the first parameter S, where $K = floor(N_{RE} \times S)$, and $floor()$ represents the nearest integer to which a returned result is rounded down.

The transmitting end performs channel coding based on the first quantity of physical resources, the first modulation order, and the mother code length, to obtain the first channel code $M$, where a code rate of the first channel code $M$ is $K'$, $K'$ is greater than or equal to $K$, $M=\text{argmin}_{M \in M1}|M-N_{RE} \times Q_m|$, and $M_1$ is the mother code length.

The transmitting end determines, based on the information bit, the code length of the first channel code, and the first quantity of physical resources, that the second modulation order is $Q'_m$, where

$$Q'_m = floor(\frac{KM}{K' N_{RE}}).$$

The transmitting end performs $Q'_m$ order modulation on the first channel code to obtain the result of the first preprocessing.

S102: The transmitting end performs rate matching processing on the result of the first preprocessing via a first neural network, to obtain a first modulation symbol.

That the transmitting end performs rate matching on the result of the first preprocessing via a first neural network may mean that the transmitting end performs puncturing processing, shortening processing, or repetition processing on the result of the first preprocessing via the first neural network.

The puncturing processing and the shortening processing mean deleting a part of the result of the first preprocessing, and mapping a remaining result to the physical resource for sending. The puncturing processing and the shortening processing can ensure that the part of the result of the first preprocessing can be sent on a limited physical resource, to improve the spectral efficiency of a system. The repetition processing means repeatedly sending the part of the result of the first preprocessing. In comparison with the puncturing processing and the shortening processing, the spectral efficiency is reduced in the manner. However, for the entire system, the part of the result may be repeatedly sent in consideration of the system performance. Therefore, the spectral efficiency of the system can also be improved in the manner.

In addition, for the shortening processing, if the transmitting end does not use the third neural network to perform channel coding, the transmitting end selects a location from an input (that is, the result of the first preprocessing) of the first neural network to pad a known bit, so that the transmitting end can learn that a location at which the shortening processing is performed during the rate matching processing is the location of the known bit, and then the transmitting end performs shortening processing on the known bit via the first neural network, that is, performs deletion processing on the known bit. If the transmitting end uses the third neural network to perform channel coding, the transmitting end does not select a location from an input of the first neural network to pad a known bit. Therefore, the transmitting end cannot learn of a location of the shortening processing in advance. For the puncturing processing, regardless of a manner in which the transmitting end performs channel coding, the transmitting end cannot learn of a location of the puncturing processing in advance.

For example, the result of the first preprocessing includes $s_0$, $s_1$, $s_2$, ..., and $s_N$. When performing puncturing processing on $s_0$, $s_1$, $s_2$, ..., and $s_N$ via the first neural network, the transmitting end may delete $s_1$. When performing shortening processing on $s_0$ , $s_1$ , $s_2$ , ..., and $s_N$ via the first neural network, the transmitting end may delete $s_2$, and $s_2$ is a known bit padded by the transmitting end before performing rate matching processing via the first neural network. When performing repetition processing on $s_0$, $s_1$, $s_2$, ..., and $s_N$ via the first neural network, the transmitting end may repeatedly send $s_N$. For example, repeatedly sent $s_N$ is $s_{N+1}$.

It can be learned that the transmitting end performs rate matching processing on the result of the first preprocessing via the first neural network, to obtain the first modulation symbol. In other words, the transmitting end applies the first neural network to the rate matching processing, to implement rate matching processing of the complex number field (for example, a symbol level), so as to improve the spectral efficiency of the system.

In an optional implementation, that the transmitting end performs rate matching processing on the result of the first preprocessing via a first neural network, to obtain a first modulation symbol includes: performing rate matching processing on the result of the first preprocessing based on the first parameter via the first neural network, to obtain the first modulation symbol. The first parameter includes one or more of the spectral efficiency, the channel capacity, the code rate, the signal-to-noise ratio, the code error rate, the signal to interference plus noise ratio, and a block error rate.

It can be learned that when performing rate matching processing on the result of the first preprocessing via the first neural network, the transmitting end further considers impact of one or more of the spectral efficiency, the channel capacity, the code rate, the signal-to-noise ratio, the code error rate, the signal to interference plus noise ratio, and the block error rate in the communication system on the rate matching processing, in other words, considers impact of a performance parameter in the communication system on the rate matching processing, to further improve the spectral efficiency of the system.

In an optional implementation, when the transmitting end performs channel coding on the to-be-sent information via the third neural network, and preprocesses, via the fourth neural network, the coded information obtained through the channel coding, the third neural network and the fourth neural network may be a same neural network, the fourth neural network and the first neural network are a same neural network, or the third neural network, the fourth neural network, and the first neural network are a same neural network.

When the third neural network and the fourth neural network are the same neural network, the neural network is used to perform channel coding and preprocessing on the to-be-sent information, to obtain the result of the first preprocessing. When the fourth neural network and the first neural network are the same neural network, the neural network is used to perform first preprocessing on the coded information, and perform rate matching processing on the result of the first preprocessing, to obtain the first modulation symbol. When the third neural network, the fourth neural network, and the first neural network are the same neural network, the neural network is used to perform channel coding on the to-be-sent information, perform first preprocessing on the coded information obtained through the channel coding, and perform rate matching processing on the result of the first preprocessing, to obtain the first modulation symbol.

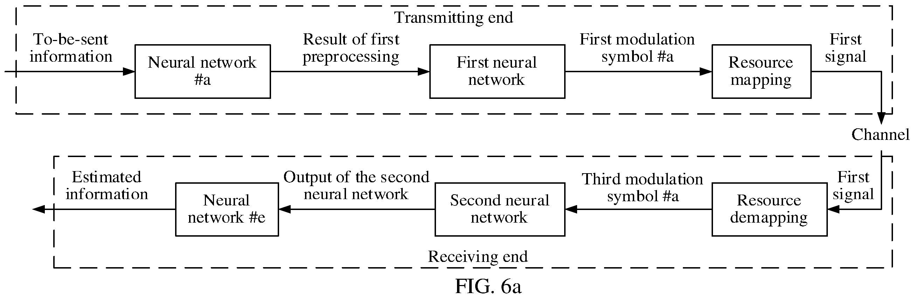

For example, when the third neural network and the fourth neural network are the same neural network and are a neural network #a, for a processing procedure of the transmitting end, refer to FIG. 6a. As shown in FIG. 6a, the transmitting end performs channel coding on the to-be-sent information via the neural network #a, and preprocesses information obtained through the channel coding, to obtain the result of the first preprocessing. Then, the transmitting end performs rate matching processing on the result of the first preprocessing via the first neural network, to obtain a first modulation symbol #a.

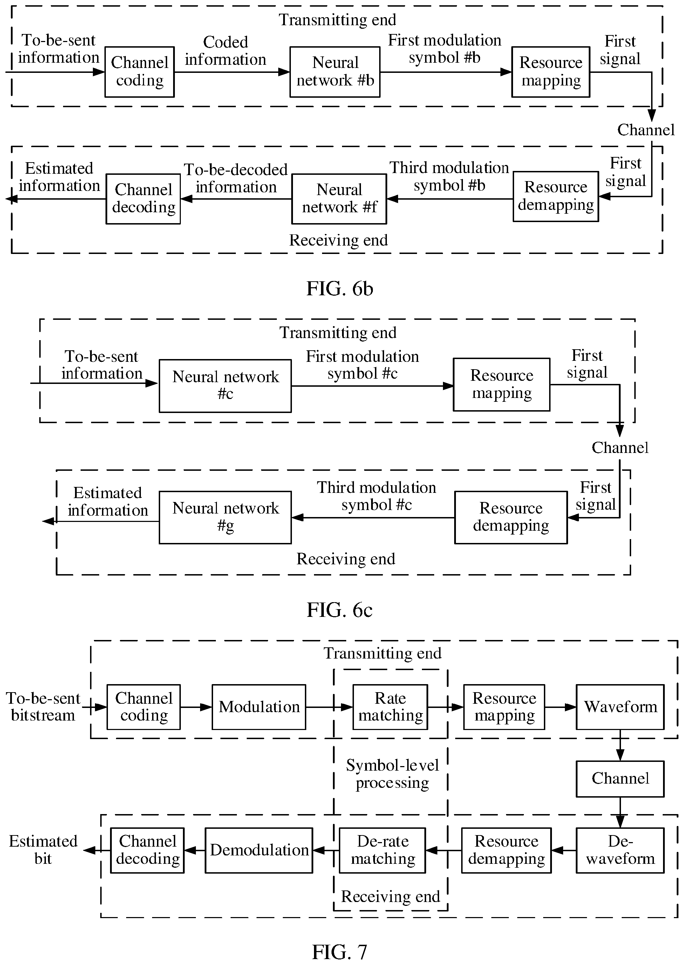

For example, when the fourth neural network and the first neural network are the same neural network and are a neural network #b, for a processing procedure of the transmitting end, refer to FIG. 6b. As shown in FIG. 6b, the transmitting end performs channel coding on the to-be-sent information, or performs channel coding on the to-be-sent information via the third neural network, to obtain the coded information. The transmitting end preprocesses the coded information via the neural network #b, to obtain the result of the first preprocessing, and performs rate matching processing on the result of the first preprocessing, to obtain a first modulation symbol #b obtained through the rate matching processing.

For example, when the third neural network, the fourth neural network, and the first neural network are the same neural network and are a neural network #c, for a processing procedure of the transmitting end, refer to FIG. 6c. As shown in FIG. 6c, the transmitting end is used to perform channel coding on the to-be-sent information via the neural network #c, preprocess the coded information obtained through the channel coding, and perform rate matching processing on the result of the first preprocessing obtained through the preprocessing, to obtain a first modulation symbol #c obtained through the rate matching processing.

S103: The transmitting end sends a first signal, where the first signal is obtained by performing resource mapping on the first modulation symbol, and correspondingly, the receiving end receives the first signal.

The transmitting end performs resource mapping on the first modulation symbol to obtain the to-be-sent first signal. The resource mapping means physical resource mapping. Therefore, the transmitting end sends the first signal, and the receiving end receives the first signal.

In an optional implementation, the transmitting end may further send indication information of the first parameter, and the first parameter is described above. Correspondingly, the receiving end may receive the first parameter. In the manner, the receiving end may obtain the first parameter, so that the receiving end can perform de-rate matching processing based on the first parameter.

In an optional implementation, the transmitting end may further send first indication information, and correspondingly, the receiving end may further receive the first indication information. The first indication information indicates a puncturing location, a shortening location, or a repetition location at which the rate matching processing is performed. The puncturing location, the shortening location, or the repetition location of the rate matching processing may be understood as a location at which a processing result is located when the transmitting end performs puncturing processing, shortening processing, or repetition processing on the result of the first preprocessing via the first neural network. For example, if the transmitting end performs puncturing processing on $s_1$ in $s_0$, $s_1$, $s_2$, ..., and $s_N$ via the first neural network, the first indication information indicates to the receiving end that the puncturing location is a location of $s_1$ in $s_0$, $s_1$, $s_2$, ..., and $s_N$.

In the manner, the receiving end can determine, based on the puncturing location, the shortening location, or the repetition location that is of the rate matching processing and that is indicated by the transmitting end by using the first indication information, a puncturing padding location, a shortening padding location, or a repetition combining location of the de-rate matching processing performed via a second neural network. This helps the receiving end perform de-rate matching at a location corresponding to that of the rate matching processing performed by the transmitting end, to ensure the system performance.

S104: The receiving end performs resource demapping on the first signal, to obtain a third modulation symbol.

It may be understood that the first signal received by the receiving end is a signal passing through a channel, and includes a noise signal. Therefore, the third modulation symbol obtained by the receiving end by performing resource demapping on the first signal is also a modulation symbol including noise information.

S105: The receiving end performs de-rate matching processing on the third modulation symbol via the second neural network, to obtain an output of the second neural network.

That the receiving end performs de-rate matching processing on the third modulation symbol via the second neural network may mean that the receiving end performs puncturing padding processing, shortening padding processing, or repetition combining processing on the third modulation symbol via the second neural network. The output of the second neural network may be a modulation symbol obtained through the de-rate matching, may be a log-likelihood ratio determined based on the modulation symbol obtained through the de-rate matching processing, or the like. The output of the second neural network is not limited in this embodiment of this application.

In an optional implementation, the transmitting end may directly or indirectly indicate the first parameter to the receiving end by using indication information. The indication information may carry the first parameter. The first parameter is described above. Details are not described again. In the manner, that the receiving end performs de-rate matching processing on the third modulation symbol via the second neural network, to obtain an output of the second neural network includes: performing de-rate matching processing on the third modulation symbol based on the first parameter via the second neural network, to obtain the output of the second neural network. It may be understood that the receiving end may determine, based on the first parameter sent by the transmitting end, the puncturing padding, shortening padding, or repetition combining location of the de-rate matching performed via the second neural network, to perform de-rate matching processing on the third modulation symbol based on the determined location.

It can be learned that when performing de-rate matching processing on the third modulation symbol via the second neural network, the transmitting end may refer to impact of the first parameter on the de-rate matching, so that impact of the performance parameter of the system on the de-rate matching processing is considered, to improve the spectral efficiency of the system. In addition, in the manner, it can be ensured that the location at which the receiving end performs de-rate matching processing corresponds to the location at which the transmitting end performs rate matching processing, to ensure the system performance.

In another optional implementation, when the receiving end performs de-rate matching processing on the third modulation symbol via the second neural network, the puncturing padding location, the shortening padding location, or the repetition combining location may alternatively be determined based on the first indication information. In other words, the receiving end determines, by using the puncturing location, the shortening location, or the repetition location that is of the rate matching processing and that is indicated by the first indication information, the puncturing padding location, the shortening padding location, or the repetition combining location of the de-rate matching processing, to ensure that the location of the de-rate matching processing is in one-to-one correspondence with the location of the rate matching processing.

In other words, if the transmitting end performs puncturing processing on the part of the result of the first preprocessing via the first neural network, the receiving end may perform, via the second neural network, puncturing padding processing on a modulation symbol at a location corresponding to that of the part of the result in the third modulation symbol. If the transmitting end performs shortening processing on the part of the result of the first preprocessing via the first neural network, the receiving end may perform, via the second neural network, shortening padding processing on a modulation symbol at a location corresponding to that of the part of the result in the third modulation symbol. If the transmitting end performs repetition processing on the part of the result of the first preprocessing via the first neural network, the receiving end may perform, via the second neural network, repetition combining processing on a modulation symbol at a location corresponding to that of the part of the result in the third modulation symbol.

For example, the result of the first preprocessing includes $s_0$, $s_1$, $s_2$, ..., and $s_N$. When performing rate matching processing on $s_0$, $s_1$, $s_2$, ..., and $s_N$ via the first neural network, the transmitting end performs puncturing processing on $s_1$. In this case, if the third modulation symbol obtained by the receiving end is $s'$, the receiving end may perform puncturing padding on $s_1'$ via the second neural network.

For example, the result of the first preprocessing includes $s_0$, $s_1$, $s_2$, ..., and $s_N$. When performing rate matching processing on $s_0$, $s_1$, $s_2$, ..., and $s_N$ via the first neural network, the transmitting end performs shortening processing on $s_2$. In this case, if the third modulation symbol obtained by the receiving end is $s'$, the receiving end may perform shortening padding on $s_2'$ via the second neural network.

For example, the result of the first preprocessing includes $s_0$, $s_1$, $s_2$, ..., and $s_N$. When performing rate matching processing on $s_0$, $s_1$, $s_2$, ..., and $s_N$ via the first neural network, the transmitting end performs repetition processing on $s_N'$, and further sends $s_{N+1}'$ when sending $s_N'$. In this case, if the third modulation symbol obtained by the receiving end is $s'$, the receiving end may perform repetition combining on $s_N'$ and $s_{N+1}'$ via the second neural network.

S106: The receiving end performs second preprocessing on the output of the second neural network, to obtain to-be-decoded information.

It can be learned that the receiving end converts the output of the second neural network into the to-be-decoded information through the second preprocessing.

In an optional implementation, the to-be-decoded information is obtained by preprocessing the output of the second neural network via a sixth neural network. In other words, the second preprocessing may be preprocessing the output of the second neural network via the sixth neural network.

In an optional implementation, the second preprocessing may be performing demodulation processing on the output of the second neural network, to obtain the to-be-decoded information.

Optionally, the second preprocessing may be performing demodulation processing on the output of the second neural network via the sixth neural network, to obtain the to-be-decoded information. It can be learned that the transmitting end may demodulate the output of the second neural network via the sixth neural network, to improve the system performance.

In an optional implementation, the receiving end may further perform channel decoding on the to-be-decoded information via a fifth neural network, to obtain estimated information. It can be learned that the receiving end may perform channel decoding on the to-be-decoded information via the fifth neural network, and the system performance can also be improved.

It may be understood that when the transmitting end performs channel coding on the to-be-sent information via the third neural network, the receiving end may perform channel decoding on the to-be-decoded information via the fifth neural network. When the transmitting end preprocesses the coded information via the fourth neural network, the receiving end may preprocess the output of the second neural network via the sixth neural network.

Correspondingly, when the third neural network and the fourth neural network are the same neural network, the sixth neural network and the fifth neural network are a same neural network; when the fourth neural network and the first neural network are the same neural network, the fifth neural network and the second neural network are a same neural network; or when the third neural network, the fourth neural network, and the first neural network are the same neural network, the sixth neural network, the fifth neural network, and the second neural network are a same neural network.

For example, when the third neural network and the fourth neural network are the neural network #a, the sixth neural network and the fifth neural network are the same neural network and are a neural network #e. In the manner, for processing procedures of the transmitting end and the receiving end, refer to FIG. 6a. As shown in FIG. 6a, the receiving end performs resource demapping on the received first signal to obtain a third modulation symbol #a. The receiving end performs de-rate matching processing on the third modulation symbol #a via the second neural network, to obtain the output of the second neural network. The receiving end preprocesses the output of the second neural network via the neural network #e, and performs channel decoding on the to-be-decoded information obtained through the preprocessing, to obtain the estimated information.

For example, when the fourth neural network and the first neural network are the neural network #b, the fifth neural network and the second neural network are the same neural network and are a neural network #f. In the manner, for processing procedures of the transmitting end and the receiving end, refer to FIG. 6b. As shown in FIG. 6b, the receiving end performs resource demapping on the received first signal to obtain a third modulation symbol #b. The receiving end performs de-rate matching processing on the third modulation symbol #b via the second neural network #f, and performs second preprocessing on a result obtained through the de-rate matching processing, to obtain the to-be-decoded information. The receiving end performs channel decoding on the to-be-decoded information, to obtain the estimated information.

For example, when the third neural network, the fourth neural network, and the first neural network are the neural network #c, the sixth neural network, the fifth neural network, and the second neural network are the same neural network and are a neural network #g. In the manner, for processing procedures of the transmitting end and the receiving end, refer to FIG. 6c. As shown in FIG. 6c, the receiving end performs resource demapping on the received first signal to obtain a third modulation symbol #c. The receiving end performs de-rate matching processing on the third modulation symbol #c via the neural network #g, performs second preprocessing on a result obtained through the de-rate matching processing, to obtain the to-be-decoded information, and then performs channel decoding on the to-be-decoded information to obtain the estimated information.

For example, when the finite field is the binary field, for a diagram of the system in this embodiment of this application, refer to FIG. 7. As shown in FIG. 7, the transmitting end sequentially performs channel coding and symbol modulation on the to-be-sent bitstream, to obtain the modulation symbol. The modulation symbol is the result of the first preprocessing. In other words, the first preprocessing is converting the coded bitstream into the modulation symbol. The transmitting end performs rate matching processing on the modulation symbol via the first neural network, to obtain the first modulation symbol. The transmitting end performs resource mapping on the first modulation symbol to generate a waveform, that is, the first signal. The transmitting end sends the first signal through the channel. The receiving end performs de-waveform processing on the received signal to obtain the first signal, and performs resource demapping on the first signal to obtain the third modulation symbol. The receiving end performs de-rate matching processing on the third modulation symbol via the second neural network, to obtain the output of the second neural network. The receiving end performs demodulation processing on the output of the second neural network to obtain the to-be-decoded information, and the demodulation processing is the second preprocessing. The receiving end performs channel estimation on the to-be-decoded information to obtain an estimated bit. It can be learned that the transmitting end performs symbol-level rate matching processing on the coded bitstream, that is, the transmitting end performs joint optimization on a symbol modulation process and a rate matching processing process, to improve the spectral efficiency of the system.

Optionally, the transmitting end may perform channel coding on the to-be-sent bitstream via the third neural network, and the transmitting end may further perform symbol modulation on the coded bitstream via the fourth neural network. Correspondingly, the receiving end may perform demodulation processing on the output of the second neural network via the fifth neural network, and the receiving end may further perform channel decoding on the to-be-decoded information via the sixth neural network.

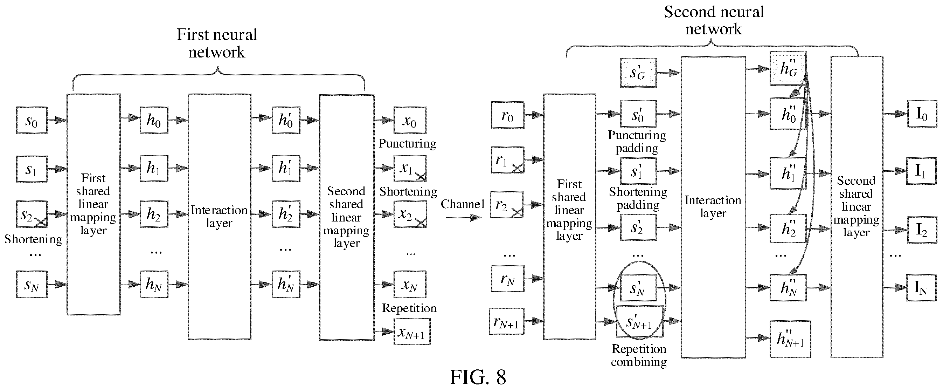

FIG. 8 is a diagram of structures of a first neural network and a second neural network. As shown in FIG. 8, the first neural network and the second neural network each include a first shared linear mapping layer, an interaction layer, and a second shared linear mapping layer. The first shared linear mapping layer is used to map an input signal to a high-dimensional space, the interaction layer is used to process a high-dimensional signal, and the second shared linear mapping layer is used to restore, to a low-dimensional space, a high-dimensional signal obtained through the processing by the interaction layer.

In this embodiment of this application, the input $s$ of the first neural network may be the to-be-sent information, may be the coded information obtained through the channel coding, or may be the result of the first preprocessing obtained through the preprocessing.

For example, the finite field is the binary field, and when the first neural network is used to perform channel coding on the to-be-sent bitstream, perform symbol modulation on the coded bitstream, and perform rate matching processing on the modulation symbol, the input of the first neural network is the to-be-sent bitstream. For another example, the finite field is the binary field, and when the first neural network is used to perform symbol modulation on the coded bitstream and perform rate matching processing on the modulation symbol, the input of the first neural network is the coded bitstream obtained by performing channel coding on the to-be-sent bitstream. For another example, the finite field is the binary field, and when the first neural network is used to perform rate matching processing on the modulation symbol, the input of the first neural network is the result of the first preprocessing, where the result of the first preprocessing may be a modulation symbol obtained by performing symbol modulation on the coded bitstream.

As shown in FIG. 8, input signals of the first neural network are $s_0$ , $s_1$ , $s_2$ , ..., and $s_N$. The first neural network maps the input signals to the high-dimensional space through the first shared linear mapping layer, to obtain $h_0$, $h_1$, $h_2$, ..., and $h_N$, where $h_0$, $h_1$, $h_2$, ..., and $h_N$ are high-dimensional signals corresponding to $s_0$, $s_1$, $s_2$, ..., and $s_N$ respectively. The first neural network processes $h_0$, $h_1$, $h_2$, ..., and $h_N$ through the interaction layer, to obtain $h_0'$ , $h_1'$, $h_2'$, ..., and $h_N'$. When processing $h_0$, $h_1$, $h_2$, ..., and $h_N$, the first neural network may extract a

feature between $h_0$, $h_1$, $h_2$, ..., and $h_N$, or may extract a feature in each high-dimensional signal in $h_0$, $h_1$, $h_2$, ..., and $h_N$. This is not limited in this embodiment of this application. Then, the first neural network maps $h_0'$, $h_1'$, $h_2'$, ..., and $h_N'$ to low-dimensional signals through the second shared linear mapping layer. The repetition processing is used as an example. Outputs of the first neural network are $x_0$, ..., $x_N$, and $x_{N+1}$. The outputs of the first neural network are signals obtained by performing rate matching on the input signals via the first neural network. $x_{N+1}$ is a signal obtained by performing repetition processing on $x_N$ via the first neural network.

As shown in FIG. 8, when performing rate matching processing via the first neural network, the transmitting end performs puncturing processing at a location $s_1$, that is, deletes $x_1$ that should have been output; performs shortening processing at a location $s_2$, that is, deletes $x_2$ that should have been output; or performs repetition processing at a location $s_N$, that is, repeatedly sends $x_N$, and in this case, sent signals include $x_N$ and $x_{N+1}$. In FIG. 8, × in a box indicates that a signal in the box is deleted. For example, when the transmitting end performs puncturing processing at the location $s_1$, × in a box $x_1$ indicates that $x_1$ is deleted. For another example, when the transmitting end performs shortening processing at the location $s_2$, × in a box $x_2$ indicates that $x_2$ is deleted.

The transmitting end performs resource mapping on the output of the first neural network to obtain the first signal, and sends the first signal through the channel. The receiving end receives the first signal, and performs resource demapping processing on the first signal to obtain third modulation symbols, where the third modulation symbols are $r_0$, ..., $r_N$, and $r_{N+1}$. $r_{N+1}$ is a modulation symbol obtained by performing resource demapping processing on $x_{N+1}$. Therefore, inputs of the second neural network are $r_0$, ..., $r_N$, and $r_{N+1}$. The second neural network maps $r_0$, ..., $r_N$, and $r_{N+1}$ to the high-dimensional space through the first shared linear mapping layer, to obtain high-dimensional signals $s'_0$, ..., $s'_N$, and $s'_{N+1}$. The receiving end performs de-rate matching processing on $s'_0$, ..., $s'_N$, and $s'_{N+1}$ via the second neural network. Then, the second neural network processes, through the interaction layer, symbols obtained through the de-rate matching, restores processed high-dimensional signals to the low-dimensional space through the second shared linear mapping layer, and outputs $l_0$, $l_1$, $l_2$, ..., and $l_N$.

A puncturing padding location, a shortening padding location, or a repetition combining location at which the receiving end performs de-rate matching processing on $s'_0$, ..., $s'_N$, and $s'_{N+1}$ via the second neural network corresponds to the puncturing location, the shortening location, or the repetition location at which the transmitting end performs rate matching processing on the input signals via the first neural network. Therefore, the receiving end may perform puncturing padding processing on $s'_1$ via the second neural network, perform shortening padding processing on $s'_2$, or perform repetition combining processing on $s'_N$ and $s'_{N+1}$.

In addition, $s'_G$ in FIG. 8 is a trainable global vector, and $s'_G$ may be predetermined. The receiving end may further process $s'_G$ through the interaction layer of the second neural network, to obtain a global vector $h''_G$. Therefore, the receiving end may further connect $h''_G$ to $h''_0$, $h''_1$, $h''_2$, ..., and $h''_N$ via the second neural network, so that the second neural network performs dimension reduction processing on connected vectors through the second shared linear mapping layer, to improve performance of the dimension reduction processing. The receiving end performs dimension reduction processing on the connected vectors through the second shared linear mapping layer, to obtain output low-dimensional signals $l_0$, $l_1$, $l_2$, ..., and $l_N$.

In another implementation, as shown in FIG. 8, when performing rate matching processing on $s_0$, $s_1$, $s_2$, ..., and $s_N$, the transmitting end performs repetition combining processing on $r_N$, that is, repeatedly sends $r_N$ and $r_{N+1}$. In the manner, when performing de-rate matching processing via the second neural network, the receiving end may not perform combining processing on $s'_N$ and $s'_{N+1}$, but separately processes $s'_N$ and $s'_{N+1}$ through the interaction layer of the second neural network, to obtain $h''_N$ and $h''_{N+1}$, deletes $h''_{N+1}$ in this case, and performs dimension reduction processing on $h''_0$, $h''_1$, $h''_2$, ..., and $h''_N$ through the second shared linear mapping layer, to output $l_0$, $l_1$, $l_2$, ..., and $l_N$.

If the transmitting end performs puncturing processing or shortening processing on a part of the input signals when performing rate matching processing on the input signals via the first neural network, the transmitting end may further map the puncturing-processed signal or the shortening-processed signal to another symbol for sending, to maximize an amount of transmitted information, so as to reduce the code error rate and improve communication performance. For example, in FIG. 8, if the transmitting end performs puncturing processing on $s_1$ via the first neural network, the transmitting end may map, for sending, $s_1$ to a symbol other than symbols to which the input signals are mapped, to ensure that $s_1$ is sent, so as to maximize the amount of transmitted information. For another example, in FIG. 8, if the transmitting end performs shortening processing on $s_2$ via the first neural network, the transmitting end may map, for sending, $s_2$ to a symbol other than symbols to which the input signals are mapped, to ensure that $s_2$ is sent, so as to maximize the amount of transmitted information.

In this embodiment of this application, the transmitting end and the receiving end may further jointly train or jointly update the first neural network and the second neural network. The following describes implementations in which the transmitting end and the receiving end jointly train or jointly update the first neural network and the second neural network.

Implementation 1: The transmitting end and the receiving end jointly update the first neural network and the second neural network based on the first signal.

In an optional implementation, the receiving end determines a first loss function based on the output of the second neural network and a label of the first signal. The receiving end determines a first gradient based on the first loss function. The receiving end updates the second neural network based on the first gradient, and sends indication information of the first gradient. The transmitting end receives the indication information of the first gradient, and updates the first neural network based on the first gradient. The indication information of the first gradient directly or indirectly indicates the first gradient, and the indication information of the first gradient may carry the first gradient.

The label of the first signal is original data for generating the first signal. For example, if the first signal is obtained by sequentially performing channel coding, symbol modulation, rate matching processing via the first neural network, and resource mapping on the to-be-sent bitstream, the label of the first signal is the to-be-sent bitstream. The label of the first signal may be sent by the transmitting end to the receiving end by using indication information, or may be obtained by the receiving end by correctly checking received data.

The output of the second neural network may be a modulation symbol obtained by performing de-rate matching on the third modulation symbol, or may be a log-likelihood ratio. When the output of the second neural network is the modulation symbol obtained by performing de-rate matching on the third modulation symbol, the receiving end determines the first loss function based on the modulation symbol and the label of the first signal. When the output of the second neural network is the log-likelihood ratio, the receiving end determines a cross entropy, a mean square error, mutual information estimation, or the like between the label of the first signal and the log-likelihood ratio, and uses the cross entropy, the mean square error, the mutual information estimation, or the like as the first loss function.

That the receiving end determines a first gradient based on the first loss function means that when the first loss function does not reach a preset threshold or a quantity of training times of the second neural network does not reach a preset quantity of times, the receiving end determines the first gradient based on the first loss function and a parameter of the second neural network, that is, obtains the first gradient by taking a derivative of the parameter of the second neural network by using the first loss function. Then, the receiving end updates the second neural network based on the first gradient by using a gradient descent method. The receiving end reversely transfers the first gradient to the transmitting end through the channel, so that the transmitting end may update the first neural network based on the first gradient by using the gradient descent method.

It can be learned that the transmitting end and the receiving end may jointly update the first neural network and the second neural network based on the first gradient determined based on the first signal, to ensure performance of the first neural network and the second neural network, so as to improve the system performance.

Implementation 2: The transmitting end and the receiving end jointly train the first neural network and the second neural network based on a training signal.

In an optional implementation, before the transmitting end obtains the result of the first preprocessing, the transmitting end and the receiving end may further jointly train the first neural network and the second neural network based on the training signal. The training signal is a predetermined signal used to train the first neural network and the second neural network. For the implementation in which the transmitting end and the receiving end jointly train the first neural network and the second neural network based on the training signal, refer to the implementation in which the transmitting end and the receiving end jointly update the first neural network and the second neural network based on the first signal. Details are not described again.

When the transmitting end and the receiving end jointly train the first neural network and the second neural network in the implementation 1 and the implementation 2, the to-be-sent information is the bitstream, and the first preprocessing is performing symbol modulation, the transmitting end and the receiving end perform joint training in the following training manners.

Manner a: The channel coding is not considered when the transmitting end and the receiving end jointly train the first neural network and the second neural network.

In an optional implementation, when a channel decoder in the communication system cannot be used for reverse transfer, the channel coding is not considered when the transmitting end and the receiving end jointly train the first neural network and the second neural network.

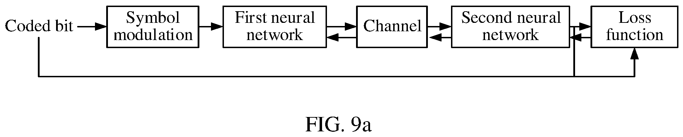

FIG. 9a is a training diagram in which channel coding is not considered when a transmitting end and a receiving end jointly train a first neural network and a second neural network. As shown in FIG. 9a, when the transmitting end and the receiving end jointly train the first neural network and the second neural network based on the first signal, the first signal sent by the transmitting end is obtained by performing symbol modulation on the coded bitstream, performing, via the first neural network, rate matching processing on a modulation symbol obtained through the symbol modulation, and then performing resource mapping on a modulation symbol obtained through the rate matching processing. The receiving end receives the first signal, performs resource demapping on the first signal, and then performs, via the second neural network, de-rate matching processing on a signal obtained through the resource demapping, to obtain the output of the second neural network. Optionally, the receiving end may further demodulate, via the second neural network, a signal obtained through the de-rate matching, so that the obtained output of the second neural network is a signal obtained by demodulating the signal obtained through the de-rate matching processing. Then, the receiving end determines the loss function based on the output of the second neural network and the label (that is, the coded bitstream) of the first signal. The receiving end determines the first gradient based on the loss function, and reversely transfers the first gradient via the second neural network and the channel. The transmitting end may update the first neural network based on the first gradient, and the receiving end may update the second neural network based on the first gradient.

In the training manner in FIG. 9a, the transmitting end does not consider the channel coding. Therefore, when performing rate matching processing via the first neural network, the transmitting end needs to consider a channel coding rule in the system, to improve the system performance.

Manner b: The channel coding is considered when the transmitting end and the receiving end jointly train the first neural network and the second neural network.

In another optional implementation, when a channel decoder in the communication system can be used for reverse transfer, the channel coding is considered when the transmitting end and the receiving end jointly train the first neural network and the second neural network.

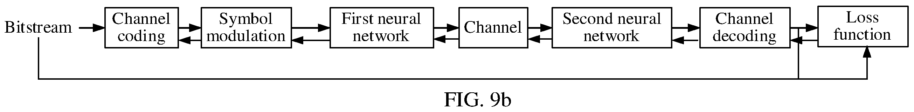

FIG. 9b is a training diagram in which channel coding is considered when a transmitting end and a receiving end jointly train a first neural network and a second neural network. As shown in FIG. 9b, when the transmitting end and the receiving end jointly train the first neural network and the second neural network based on the first signal, the first signal sent by the transmitting end is obtained by performing channel coding on the to-be-sent bitstream, performing symbol modulation on the coded bitstream obtained through the channel coding, performing, via the first neural network, rate matching processing on a modulation symbol obtained through the symbol modulation, and then performing resource mapping on a modulation symbol obtained through the rate matching processing.

The receiving end receives the first signal, performs resource demapping on the first signal, and then performs, via the second neural network, de-rate matching processing on a signal obtained through the resource demapping, to obtain the output of the second neural network. Optionally, the receiving end may demodulate, via the second neural network, a signal obtained through the de-rate matching processing, so that the output of the second neural network is a demodulated signal. Then, the receiving end performs channel decoding on the output of the second neural network via the channel decoder, and determines the loss function based on information obtained through the channel decoding and the label (that is, the to-be-sent bitstream) of the first signal. The receiving end determines the first gradient based on the loss function, and reversely transfers the first gradient via the channel decoder, the second neural network, and the channel decoder. Therefore, the transmitting end receives the first gradient, and updates the first neural network based on the first gradient. The receiving end may update the second neural network based on the first gradient. The channel decoder may be a differentiable decoder. When reversely transferring the first gradient via the channel decoder, the receiving end may directly reversely transfer the first gradient to the second neural network without processing the first gradient via the channel decoder. In other words, in addition to being used for the channel decoding, the channel decoder may be further used as a transmission medium for reversely transferring the first gradient.

Optionally, in the training manners in FIG. 9a and FIG. 9b, if the transmitting end performs symbol modulation on the coded bitstream via the fourth neural network, the transmitting end may further update the fourth neural network based on the first gradient. Correspondingly, the receiving end may further update, based on the first gradient, the fifth neural network used for the demodulation processing.

In the training manner in FIG. 9b, the transmitting end considers the channel coding. Therefore, when performing rate matching processing via the first neural network, the transmitting end does not need to consider a channel coding rule in the system.

Manner c: The transmitting end performs channel coding via the third neural network when the transmitting end and the receiving end jointly train the first neural network and the second neural network.

In still another optional implementation, when a channel decoder in the system can be used for reverse transfer, the channel coding is considered and the transmitting end performs channel coding via the third neural network when the transmitting end and the receiving end jointly train the first neural network and the second neural network.

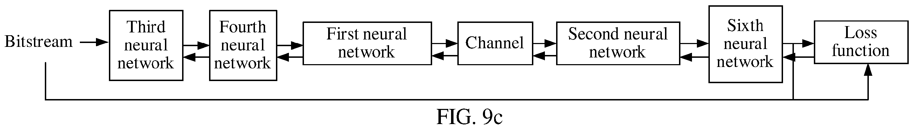

FIG. 9c is a training diagram in which channel coding is performed via a third neural network when a transmitting end and a receiving end jointly train a first neural network and a second neural network. As shown in FIG. 9c, when the transmitting end and the receiving end jointly train the first neural network and the second neural network based on the first signal, the first signal sent by the transmitting end is obtained by performing channel coding on the to-be-sent bitstream via the third neural network, performing, via the fourth neural network, symbol modulation on the coded bitstream obtained through the channel coding, performing, via the first neural network, rate matching processing on a modulation symbol obtained through the symbol modulation, and then performing resource mapping on a modulation symbol obtained through the rate matching processing.

The receiving end receives the first signal, performs resource demapping on the first signal, and then performs, via the second neural network, de-rate matching processing on a signal obtained through the resource demapping, to obtain the output of the second neural network. The receiving end performs demodulation and channel decoding on the output of the second neural network via the sixth neural network, and determines the loss function based on information obtained through the channel decoding and the label (that is, the to-be-sent bitstream) of the first signal. Optionally, the receiving end may demodulate, via the second neural network, a signal obtained through the de-rate matching processing, so that the output of the second neural network is a demodulated signal. The receiving end performs channel decoding on the output of the second neural network via the sixth neural network, and then determines the loss function based on the information obtained through the channel decoding and the label of the first signal. The receiving end determines the first gradient based on the loss function, and reversely transfers the first gradient via the channel decoder, the second neural network, and the channel. The transmitting end receives the first gradient, and may update the first neural network, the third neural network, and the fourth neural network based on the first gradient. The receiving end may update the second neural network based on the first gradient. Optionally, the receiving end may further update, based on the first gradient, the fifth neural network used for the demodulation processing. When reversely transferring the first gradient via the channel decoder, the receiving end may reversely transfer the first gradient to the second neural network without processing the first gradient. In other words, the channel decoder is used as a transmission medium for reversely transferring the first gradient.

Optionally, one or more of the third neural network and the fourth neural network may be a pre-trained neural network, and when updating the first neural network, the transmitting end does not update the pre-trained neural network. Correspondingly, one or more of the fifth neural network and the sixth neural network may also be a pre-trained neural network, and when updating the second neural network, the receiving end does not update the pre-trained neural network either.

Implementation 3: The transmitting end and the receiving end jointly train a first preset neural network and a second preset neural network based on a first preset training signal, to obtain the first neural network and the second neural network.

The first preset training signal may be a signal obtained by performing channel coding, symbol modulation, preprocessing, and the like on a training signal or a pilot signal. The first preset neural network and the second preset neural network may be neural networks obtained through learning in a neural network training method. For example, the first neural network and the second preset neural network are neural networks obtained through meta-learning.

The transmitting end performs rate matching processing on the first preset training signal via the first preset neural network, to obtain a second modulation symbol. The transmitting end sends a second signal, where the second signal is obtained by performing resource mapping on the second modulation symbol. The receiving end receives the second signal, and performs, via the second preset neural network, de-rate matching processing on a signal obtained by performing resource demapping on the second signal, to obtain an output of the second preset neural network. The receiving end determines a second loss function based on the output of the second preset neural network and a label of the first preset training signal. The receiving end determines a second gradient based on the second loss function, and updates the second preset neural network based on the second gradient, to obtain the second neural network. The receiving end sends indication information of the second gradient. The transmitting end receives the indication information of the second gradient, and updates the first preset neural network based on the second gradient indicated by the indication information, to obtain the first neural network.

That the receiving end determines a second gradient based on the second loss function, and updates the second preset neural network based on the second gradient, to obtain the second neural network means that the receiving end updates the second preset neural network based on the second gradient when the second loss function reaches a preset threshold or a preset quantity of times is reached, to obtain the second neural network. If the second loss function does not reach the preset threshold and a quantity of training times does not reach the preset quantity of training times, the second preset neural network is updated based on the second gradient, the second gradient is returned to the transmitting end, and the transmitting end updates the first preset neural network based on the second gradient. The transmitting end and the receiving end continue to jointly train the first preset neural network and the second preset neural network based on another preset training signal, until the second loss function reaches the preset threshold, or the quantity of training times reaches the preset quantity of times. The transmitting end obtains the first neural network by updating the first preset neural network, and the receiving end obtains the second neural network by updating the second preset neural network.

In an optional implementation, when sending the second gradient, the receiving end may directly send the second gradient to the transmitting end, or the receiving end directly or indirectly indicates the second gradient by sending the indication information, where the indication information may carry the second gradient. Optionally, the receiving end obtains channel estimation information by using a channel estimation algorithm, performs multiplication processing on the channel estimation information and the second gradient, and sends a second gradient obtained through channel coding and modulation to the transmitting end.

Correspondingly, the transmitting end may directly receive the second gradient, and update the first preset neural network based on the second gradient. Alternatively, the transmitting end performs demodulation and channel decoding processing on the received second gradient to obtain an intermediate gradient, and updates the first preset neural network based on the intermediate gradient. Alternatively, the transmitting end may determine the second gradient based on the indication information, and update the first preset neural network based on the second gradient. The indication information directly or indirectly indicates the second gradient, and the indication information may carry the second gradient.

In the implementation, the first preset training signal is a preprocessed signal, and the first preset neural network and the second preset neural network are neural networks obtained by learning in advance. Therefore, when the transmitting end and the receiving end jointly train the first preset neural network and the second preset neural network based on the first preset training signal, training time of the first neural network and the second neural network can be shortened. Because a fading channel changes rapidly, the training manner is applicable to training of the first neural network and the second neural network on the fading channel. Further, the signal processing method in this embodiment of this application is applicable to the fading channel, and the spectral efficiency can be improved on the fading channel.

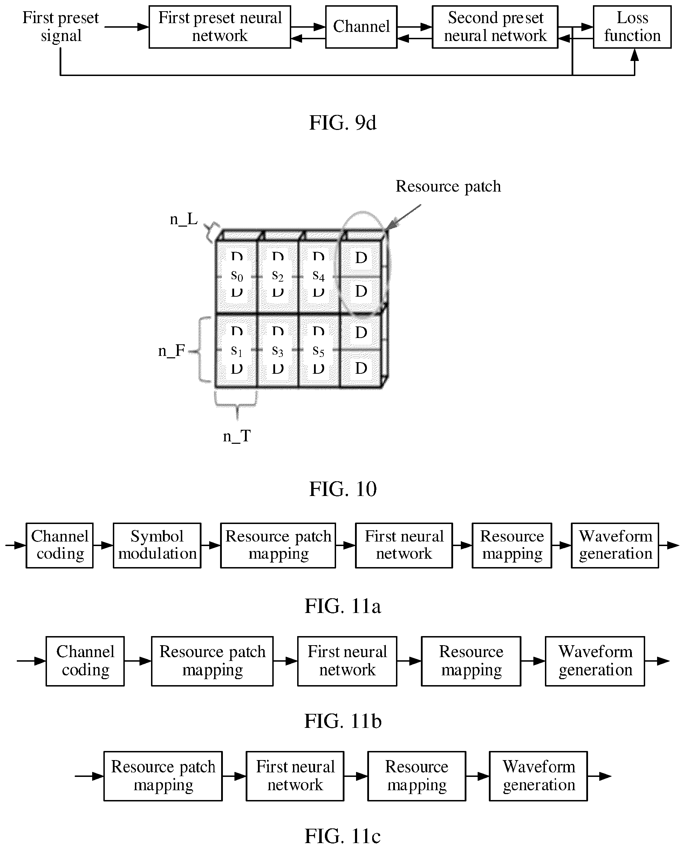

FIG. 9d is a training diagram in which a transmitting end and a receiving end jointly train a first preset neural network and a second preset neural network. Compared with the training diagrams shown in FIG. 9a to FIG. 9c, the training diagram shown in FIG. 9d does not include channel coding, channel modulation, or channel decoding processing in the training process.

In an optional implementation, if the transmitting end and the receiving end jointly train the first preset neural network and the second preset neural network based on the first preset training signal, the puncturing location, the shortening location, or the repetition location at which the transmitting end performs rate matching on the result of the first preprocessing via the first neural network may be determined based on a channel estimation result. The channel estimation result may be a channel estimation result of channel estimation performed by the transmitting end, or may be a channel estimation result of channel estimation performed by the receiving end. The channel estimation result is the channel estimation result of the channel estimation performed by the receiving end, and the receiving end indicates the channel estimation result to the transmitting end by using indication information.

The puncturing location or the shortening location at which the transmitting end performs rate matching on the result of the first preprocessing via the first neural network may be locations of N sub-channels whose channel gains are less than a first threshold in the channel estimation result, where N is an integer greater than or equal to 1, and the N sub-channels are channels corresponding to N subcarriers in a physical resource that is for transmission.

Optionally, the puncturing location, the shortening location, or the repetition location at which the transmitting end performs rate matching on the result of the first preprocessing via the first neural network may be determined based on the second gradient. The puncturing location or the shortening location at which the transmitting end performs rate matching on the result of the first preprocessing via the first neural network may be locations of N sub-channels with a minimum gradient value in the second gradient.

Optionally, when the to-be-sent information is not the bitstream, the transmitting end may also train or update the first neural network and the second neural network by using one training procedure in FIG. 9a to FIG. 9d.

In this embodiment of this application, because a minimum resource granularity of neural network processing is a resource patch, the input of the first neural network is a signal obtained through resource patch mapping. The resource patch (resource patch) is a virtual resource granularity, and is a subset of a scheduled physical resource. As shown in FIG. 10, a parameter set included in a resource patch configuration is (n_F, n_T, n_L), that is, includes three parameters, where the three parameters respectively represent granularities of a frequency dimension, a time dimension, and a space dimension. The resource patch is configured by a network device, and the configuration of the resource patch is related to a computing resource available at the receiving end and a time-frequency-space correlation of the channel. A larger computing resource of the receiving end indicates a smaller size ( n_F * n_T * n_L ) of the resource patch, and a larger correlation between a time domain, a frequency domain, and a space domain indicates a larger parameter configuration corresponding to a dimension.

When the first neural network is used for different purposes, locations at which the transmitting end performs resource patch mapping at a physical layer are different. When the first neural network is used to perform rate matching, for a diagram of a processing procedure of the transmitting end at the physical layer, refer to FIG. 11a. As shown in FIG. 11a, the transmitting end sequentially performs channel coding, symbol modulation, and resource patch mapping at the physical layer, then performs, via the first neural network, rate matching processing on the result of the first preprocessing obtained through the resource patch mapping, then performs a physical resource signal and waveform generation on a modulation symbol obtained through the rate matching processing, and sends a waveform through the channel. In the manner, the transmitting end performs resource patch mapping on a modulation symbol obtained through the symbol modulation, to ensure that the input of the first neural network is a signal obtained through the resource patch mapping.

When the first neural network is used to perform symbol modulation and rate matching, for a diagram of a processing procedure of the transmitting end at the physical layer, refer to FIG. 11b. As shown in FIG. 11b, the transmitting end performs channel coding on the to-be-sent information at the physical layer, performs resource patch mapping on coded information obtained through the channel coding, then performs, via the first neural network, symbol modulation and rate matching processing on the result of the first preprocessing obtained through the resource patch mapping, then performs physical resource mapping and waveform generation on a modulation symbol obtained through the rate matching processing, and sends a waveform through the channel. In the manner, the transmitting end performs resource patch mapping on the coded information obtained through the channel coding, to ensure that the input of the first neural network is a signal obtained through the resource patch mapping.

When the first neural network is used to perform channel coding, symbol modulation, and rate matching, for a diagram of a processing procedure of the transmitting end at the physical layer, refer to FIG. 11c. As shown in FIG. 11c, the transmitting end performs resource patch mapping on the to-be-sent information at the physical layer, then sequentially performs, via the first neural network, channel coding, symbol modulation, and rate matching processing on information obtained through the resource patch mapping, then performs physical resource mapping and waveform generation on a modulation symbol obtained through the rate matching, and sends a waveform through the channel. In the manner, the transmitting end performs resource patch mapping on the to-be-sent information, to ensure that the input of the first neural network is a signal obtained through the resource patch mapping.

In this embodiment of this application, the transmitting end performs rate matching processing on the obtained result of the first preprocessing via the first neural network, to obtain the first modulation symbol, and sends the first signal obtained by performing resource mapping on the first modulation symbol. The receiving end receives the first signal, and performs resource demapping on the first signal, to obtain the third modulation symbol. The receiving end performs de-rate matching processing on the third modulation symbol, to obtain the output of the second neural network. The receiving end performs second preprocessing on the output of the second neural network, to obtain the to-be-decoded information.

It can be learned that the transmitting end may perform rate matching processing of the complex number field (for example, the symbol level) on the result of the first preprocessing via the first neural network, and the receiving end may perform, via the second neural network, de-rate matching processing of the complex number field (for example, the symbol level) on a signal obtained through the de-rate matching, to improve the spectral efficiency of the system.

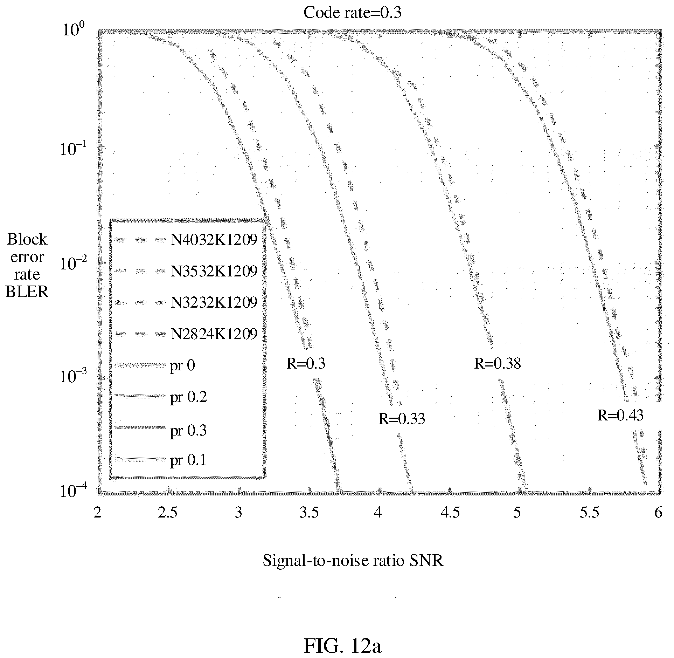

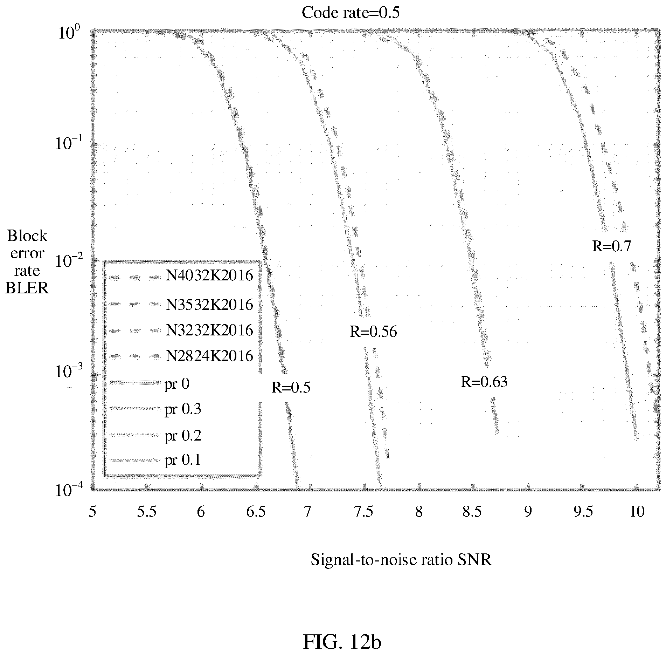

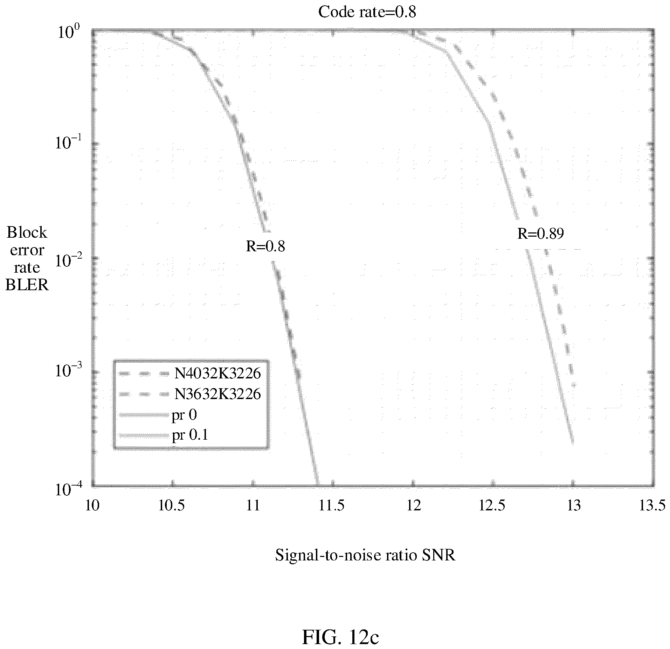

FIG. 12a, FIG. 12b, and FIG. 12c are respectively line graphs of a signal-to-noise ratio (signal-to-noise ratio, SNR) versus a block error rate (block error rate, BLER) when a transmitting end performs channel coding at a code rate of 0.3, 0.5, and 0.8 and uses low density parity check codes (low density parity check codes, LDPC) with a same code length and code rate according to embodiments of this application. It can be learned from FIG. 12a, FIG. 12b, and FIG. 12c that when the transmitting end uses the signal processing method provided in this embodiment of this application, a good block error rate gain can be obtained at different code rates.

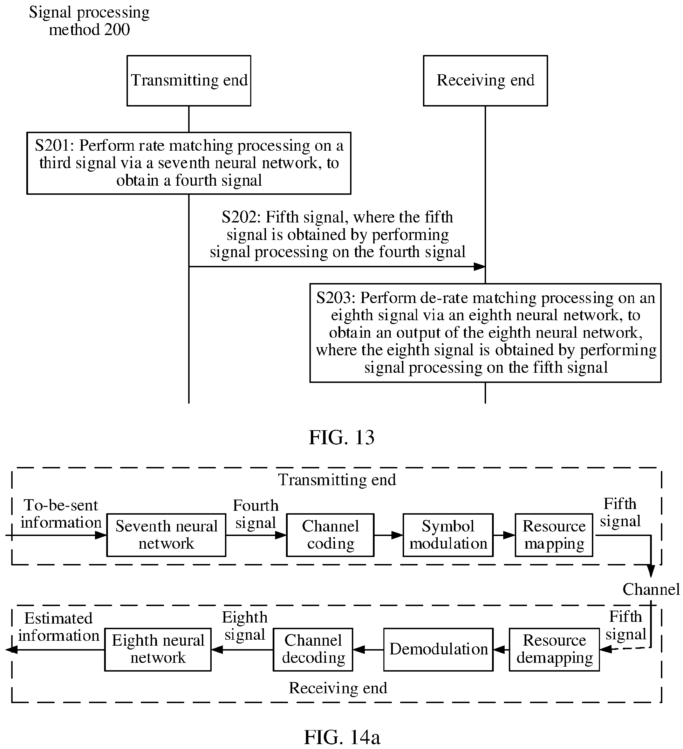

An embodiment of this application further provides a signal processing method 200. FIG. 13 is an interaction diagram of the signal processing method 200. The signal processing method 200 is described from perspectives of a transmitting end and a receiving end. The signal processing method 200 includes but is not limited to the following steps.

S201: The transmitting end performs rate matching processing on a third signal via a seventh neural network, to obtain a fourth signal.

The third signal may be to-be-sent information, may be coded information obtained through channel coding, or may be a processing result of converting the coded information into a complex number field. The processing result may be a modulation symbol.

S202: The transmitting end sends a fifth signal, where the fifth signal is obtained by performing signal processing on the fourth signal. Correspondingly, the receiving end receives the fifth signal.

The fifth signal received by the receiving end is a signal obtained after the fifth signal sent by the transmitting end passes through a channel, and the received fifth signal includes noise information.

When the third signals are different, the fifth signal is obtained by performing different signal processing on the fourth signal. When the third signal is the to-be-sent information, the fifth signal may be obtained by sequentially performing channel coding, symbol modulation, and resource mapping on the fourth signal. When the third signal is the coded information, the fifth signal may be obtained by performing symbol modulation and resource mapping on the fourth signal. When the third signal is the processing result, the fifth signal may be a signal obtained by performing symbol modulation and resource mapping on the fourth signal, or may be a signal obtained by performing resource mapping on the fourth signal.

S203: The receiving end performs de-rate matching processing on an eighth signal via an eighth neural network, to obtain an output of the eighth neural network, where the eighth signal is obtained by performing signal processing on the fifth signal.

Correspondingly, when the third signals are different, the eighth signal is obtained by performing different signal processing on the fifth signal. When the third signal is the to-be-sent information, the eighth signal may be obtained by sequentially performing resource demapping, demodulation processing, and channel decoding processing on the fifth signal. When the third signal is the coded information, the eighth signal may be obtained by performing resource demapping and demodulation processing on the fifth signal. When the third signal is the modulation symbol, the eighth signal may be obtained by performing resource demapping on the fifth signal.

It can be learned that when the third signals are different, processing procedures of the transmitting end and the receiving end are different. FIG. 14a is a diagram of signal processing performed by a transmitting end and a receiving end when a third signal is to-be-sent information. As shown in FIG. 14a, the transmitting end performs rate matching processing on the to-be-sent information via the seventh neural network, to obtain the fourth signal. The transmitting end performs channel coding on the fourth signal, performs symbol modulation on coded information obtained through the channel coding, performs resource mapping and waveform generation, that is, generation of the fifth signal on a modulation symbol obtained through the symbol modulation, and sends the fifth signal through the channel. Correspondingly, the receiving end receives the fifth signal, and sequentially performs de-waveform processing, resource demapping, demodulation processing, and channel decoding on the fifth signal. Then, the receiving end performs, via the eighth neural network, de-rate matching processing on a signal obtained through the channel decoding, to obtain estimated information. In the manner, the transmitting end performs rate matching processing on the to-be-sent information via the seventh neural network, and the receiving end performs, via the eighth neural network, de-rate matching processing on the signal obtained through the channel decoding.

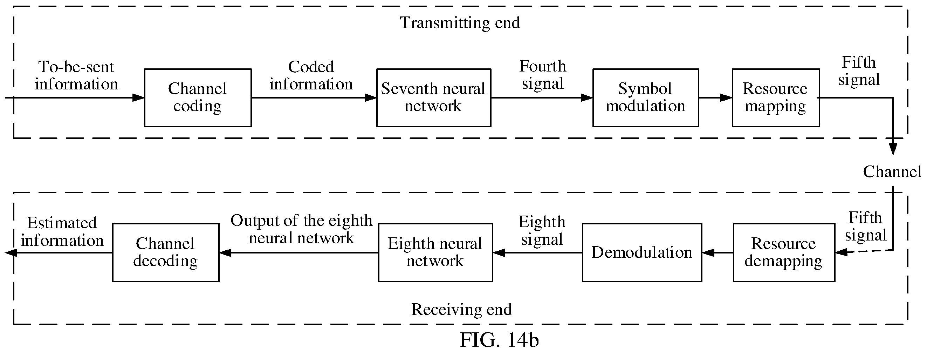

FIG. 14b is a diagram of signal processing performed by a transmitting end and a receiving end when a third signal is coded information. As shown in FIG. 14b, the transmitting end performs channel coding on the to-be-sent information, to obtain the coded information. The transmitting end performs rate matching on the coded information via the seventh neural network, to obtain the fourth signal. The transmitting end sequentially performs symbol modulation, resource mapping, and waveform generation on the fourth signal to obtain the fifth signal, and sends the fifth signal through the channel. Correspondingly, the receiving end receives the fifth signal, and sequentially performs de-waveform processing, resource demapping processing, and demodulation processing on the fifth signal to obtain the eighth signal. Then, the receiving end performs de-rate matching processing on the eighth signal via the eighth neural network, to obtain the output of the eighth neural network. The receiving end performs channel decoding on the output of the eighth neural network, to obtain estimated information.

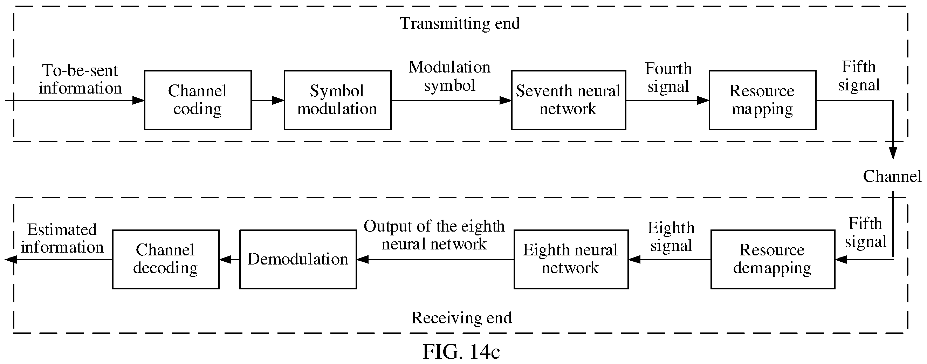

FIG. 14c is a diagram of signal processing performed by a transmitting end and a receiving end when a third signal is a modulation symbol. As shown in FIG. 14c, the transmitting end sequentially performs channel coding and symbol modulation on the to-be-sent information, to obtain the modulation symbol. The transmitting end performs rate matching processing on the modulation symbol via the seventh neural network, to obtain the fourth signal. The transmitting end performs resource mapping and waveform generation on the fourth signal to obtain the fifth signal, and sends the fifth signal through the channel. The receiving end receives the fifth signal, and performs de-waveform processing on the fifth signal to obtain the eighth signal. The receiving end performs de-rate matching processing on the eighth signal via the eighth neural network, to obtain the output of the eighth neural network. The receiving end sequentially performs demodulation processing and channel decoding on the output of the eighth neural network, to obtain estimated information.

Optionally, the transmitting end may implement one or more of the channel coding and the symbol modulation in FIG. 14a to FIG. 14c via the neural network. Correspondingly, the receiving end may implement one or more of the channel decoding and the demodulation in FIG. 14a to FIG. 14c via the neural network.

In an optional implementation, before the transmitting end performs rate matching processing on the third signal via the seventh neural network, to obtain the fourth signal, the transmitting end may further perform rate matching processing on a second preset training signal via a third preset neural network, to obtain a sixth signal. The transmitting end sends a seventh signal, where the seventh signal is obtained by performing resource mapping on the sixth signal. Correspondingly, the receiving end receives the seventh signal, and performs, via a fourth preset neural network, de-rate matching processing on a signal obtained by performing resource demapping on the seventh signal, to obtain an output of the fourth preset neural network. The receiving end determines a third loss function based on the output of the fourth preset neural network and a label of the second preset signal. The receiving end determines a third gradient based on the third loss function. The receiving end updates the fourth preset neural network based on the third gradient, to obtain the eighth neural network. The receiving end sends indication information of the third gradient, and correspondingly, the transmitting end receives the indication information of the third gradient. The transmitting end updates the third preset neural network based on the third gradient, to obtain the seventh neural network. The indication information of the third gradient directly or indirectly indicates the third gradient, and the indication information of the third gradient may carry the third gradient.

The second preset training signal is a signal obtained through the channel coding and/or the symbol modulation, and the third preset neural network and the fourth preset neural network are neural networks obtained by learning in advance.

It can be learned that the transmitting end may further train a pre-learned third neural network by using the second preset training signal obtained through preprocessing, to obtain the seventh neural network. The receiving end may train a pre-learned fourth neural network based on the second preset training signal, to obtain the eighth neural network. In the training manner, time for training the third preset neural network by the transmitting end may be shortened, and time for training the fourth preset neural network by the receiving end may be shortened, to be applicable to a rapidly changing fading channel.

In this embodiment of this application, the transmitting end performs rate matching processing on the third signal via the seventh neural network, to obtain the fourth signal. The transmitting end sends the fifth signal, where the fifth signal is obtained by performing signal processing on the fourth signal. The receiving end performs de-rate matching processing on the eighth signal via the eighth neural network, to obtain the output of the eighth neural network, where the eighth signal is obtained by performing signal processing on the fifth signal. It can be learned that the transmitting end implements the rate matching processing via the seventh neural network, and the receiving end implements the de-rate matching processing via the eighth neural network, to improve spectral efficiency of a system.

To implement functions in the methods provided in embodiments of this application, a first apparatus may include a hardware structure and/or a software module, and implement the foregoing functions in a form of the hardware structure, the software module, or a combination of the hardware structure and the software module. Whether a specific function in the foregoing functions is performed by the hardware structure, the software module, or the combination of the hardware structure and the software module depends on a particular application and a design constraint condition of the technical solutions.

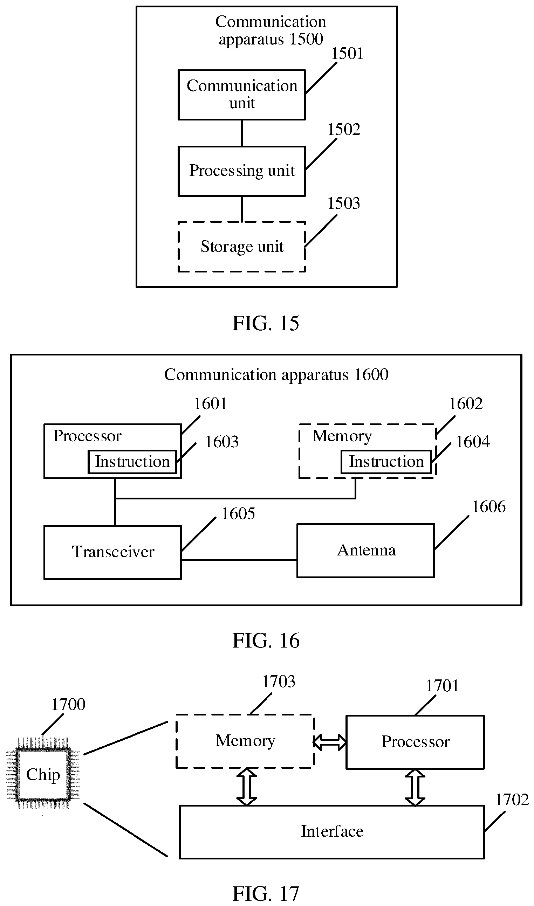

As shown in FIG. 15, an embodiment of this application provides a communication apparatus 1500. The communication apparatus 1500 may be a component (for example, an integrated circuit or a chip) at a transmitting end, or may be a component (for example, an integrated circuit or a chip) at a receiving end. Alternatively, the communication apparatus 1500 may be another communication unit, configured to implement the methods in the method embodiments of this application. The communication apparatus 1500 may include a communication unit 1501 and a processing unit 1502. Optionally, a storage unit 1503 may be further included.

In a possible design, one or more units in FIG. 15 may be implemented by one or more processors, implemented by one or more processors and memories, implemented by one or more processors and transceivers, or implemented by one or more processors, memories, and transceivers. This is not limited in this embodiment of this application. The processor, the memory, and the transceiver may be separately disposed, or may be integrated.

The communication apparatus 1500 has a function of implementing the transmitting end or the receiving end described in embodiments of this application. For example, the communication apparatus 1500 includes a corresponding module, unit, or means (means) used for the transmitting end to perform the steps related to the transmitting end described in embodiments of this application. The function, the unit, or the means (means) may be implemented by software or hardware, may be implemented by hardware executing corresponding software, or may be implemented by a combination of software and hardware. For details, refer to the corresponding descriptions in the foregoing corresponding method embodiments.

In a possible design, the communication apparatus 1500 may include the processing unit 1502 and the communication unit 1501.

The processing unit 1502 is configured to obtain a result of first preprocessing, where the first preprocessing is converting to-be-sent information from a finite field to a complex number field.

The processing unit 1502 is further configured to perform rate matching processing on the result of the first preprocessing via a first neural network, to obtain a first modulation symbol.

The communication unit 1501 is configured to send a first signal, where the first signal is obtained by performing resource mapping on the first modulation symbol.

In an optional implementation, when performing rate matching processing on the result of the first preprocessing via the first neural network, to obtain the first modulation symbol, the processing unit 1502 is specifically configured to perform rate matching processing on the result of the first preprocessing based on a first parameter via the first neural network, to obtain the first modulation symbol, where the first parameter includes one or more of spectral efficiency, a channel capacity, a code rate, a signal-to-noise ratio, a code error rate, a signal to interference plus noise ratio, and a block error rate.

In an optional implementation, the processing unit 1502 is further configured to: receive indication information of a first gradient, where the first gradient is determined based on a first loss function, the first loss function is determined based on an output of a second neural network and a label of the first signal, and the second neural network is used to perform de-rate matching processing on a signal obtained by performing resource demapping on the first signal; and update the first neural network based on the first gradient.

In an optional implementation, the finite field is a binary field, and the to-be-sent information is a bitstream.

In an optional implementation, the first preprocessing is converting a to-be-sent bitstream into a modulation symbol stream.

In an optional implementation, the result of the first preprocessing is obtained by preprocessing a coded bitstream, and the coded bitstream is obtained by performing channel coding on the to-be-sent information via a third neural network.

In an optional implementation, the result of the first preprocessing is obtained by preprocessing the coded bitstream via a fourth neural network.

In an optional implementation, before performing rate matching processing on the result of the first preprocessing via the first neural network, to obtain the first modulation symbol, the processing unit 1502 may be further configured to: perform rate matching processing on a first preset training signal via a first preset neural network, to obtain a second modulation symbol; send a second signal, where the second signal is obtained by performing resource mapping on the second modulation symbol; receive indication information of a second gradient, where the second gradient is determined based on a second loss function, the second loss function is determined based on an output of a second preset neural network and a label of the first preset training signal, and the second preset neural network is used to perform de-rate matching processing on a signal obtained by performing resource demapping on the second signal; and update the first preset neural network based on the second gradient, to obtain the first neural network.

In an optional implementation, a puncturing location, a shortening location, or a repetition location at which the first neural network performs rate matching processing on the result of the first preprocessing is determined based on a channel estimation result; or a puncturing location, a shortening location, or a repetition location at which the first neural network performs rate matching processing on the result of the first preprocessing is determined based on the second gradient.

In an optional implementation, the communication unit 1501 is further configured to send first indication information, where the first indication information indicates the puncturing location, the shortening location, or the repetition location of the rate matching processing.

In an optional implementation, when obtaining the result of the first preprocessing, the processing unit 1502 is specifically configured to: perform channel coding based on a first quantity of physical resources, a first modulation order, and a mother code length, to obtain first channel code, where the first modulation order is determined based on the first parameter; determine a second modulation order based on an information bit, a code length of the first channel code, and the first quantity of physical resources, where the information bit is determined based on the first quantity of physical resources and the first parameter; and perform symbol modulation on the first channel code based on the second modulation order, to obtain the result of the first preprocessing.

This embodiment of this application and the foregoing method embodiment are based on a same concept, and bring same technical effects. For a specific principle, refer to descriptions of the foregoing embodiment. Details are not described again.

In another possible design, the communication apparatus 1500 may include the processing unit 1502 and the communication unit 1501.

The communication unit 1501 is configured to receive a first signal.

The processing unit 1502 is configured to perform resource demapping on the first signal, to obtain a third modulation symbol.

The processing unit 1502 is further configured to perform de-rate matching processing on the third modulation symbol via a second neural network, to obtain an output of the second neural network.

The processing unit 1502 is further configured to perform second preprocessing on the output of the second neural network, to obtain to-be-decoded information.

In an optional implementation, when performing de-rate matching processing on the third modulation symbol via the second neural network, to obtain the output of the second neural network, the processing unit 1502 is specifically configured to: perform de-rate matching processing on the third modulation symbol based on a first parameter via the second neural network, to obtain the output of the second neural network, where the first parameter includes one or more of spectral efficiency, a channel capacity, a code rate, a signal-to-noise ratio, a code error rate, a signal to interference plus noise ratio, and a block error rate. The first parameter includes one or more of the spectral efficiency, the channel capacity, the code rate, the signal-to-noise ratio, the code error rate, the signal to interference plus noise ratio, and the block error rate.

In an optional implementation, the processing unit 1502 is further configured to perform channel decoding on the to-be-decoded information via a fifth neural network.

In an optional implementation, the to-be-decoded information is obtained by preprocessing the output of the second neural network via a sixth neural network.

In an optional implementation, the processing unit 1502 is further configured to: determine a first loss function based on the output of the second neural network and a label of the first signal; determine a first gradient based on the first loss function; update the second neural network based on the first gradient; and send indication information of the first gradient.

In an optional implementation, when determining the first loss function based on the output of the second neural network and the label of the first signal, the processing unit 1502 is specifically configured to: perform channel decoding on the output of the second neural network by using a channel decoder, to obtain an estimated bit or a decoded soft value; and determine the first loss function based on the estimated bit and the label of the first signal; or determine the first loss function based on the decoded soft value and the label of the first signal.

In an optional implementation, before the communication unit 1501 receives the first signal, the processing unit 1502 is further configured to: receive a second signal; perform, via a second preset neural network, de-rate matching processing on a signal obtained by performing resource demapping on the second signal, to obtain an output of the second preset neural network; determine a second loss function based on the output of the second preset neural network and a label of a first preset training signal; determine a second gradient based on the second loss function; update the second preset neural network based on the second gradient, to obtain the second neural network; and send indication information of the second gradient.

In an optional implementation, the processing unit 1502 is further configured to: receive first indication information, where the first indication information indicates a puncturing location, a shortening location, or a repetition location of rate matching processing; and determine, based on the first indication information, a puncturing padding location, a shortening padding location, or a repetition combining location of the de-rate matching processing performed via the second neural network.

This embodiment of this application and the foregoing method embodiment are based on a same concept, and bring same technical effects. For a specific principle, refer to descriptions of the foregoing embodiment. Details are not described again.

In still another possible design, the communication apparatus 1500 may include the processing unit 1502 and the communication unit 1501.

The processing unit 1502 is configured to perform rate matching processing on a third signal via a seventh neural network, to obtain a fourth signal.

The communication unit 1501 is configured to send a fifth signal, where the fifth signal is obtained by performing signal processing on the fourth signal.

In an optional implementation, before performing rate matching processing on the third signal via the seventh neural network, to obtain the fourth signal, the processing unit 1502 is further configured to: perform rate matching processing on a second preset training signal via a third preset neural network, to obtain a sixth signal; send a seventh signal, where the seventh signal is obtained by performing resource mapping on the sixth signal; receive indication information of a third gradient, where the third gradient is determined based on a third loss function, the third loss function is determined based on an output of a fourth preset neural network and a label of the second preset training signal, and the fourth preset neural network is used to perform de-rate matching processing on a signal obtained by performing resource demapping on the seventh signal; and update the third preset neural network based on the third gradient, to obtain the seventh neural network.

This embodiment of this application and the foregoing method embodiment are based on a same concept, and bring same technical effects. For a specific principle, refer to descriptions of the foregoing embodiment. Details are not described again.

In still another possible design, the communication apparatus 1500 may include the processing unit 1502 and the communication unit 1501.

The communication unit 1501 is configured to receive a fifth signal.

The processing unit 1502 is configured to perform de-rate matching processing on an eighth signal via an eighth neural network, to obtain an output of the eighth neural network, where the eighth signal is obtained by performing signal processing on the fifth signal.

In an optional implementation, before the communication unit 1501 receives the fifth signal, the processing unit 1502 is further configured to: receive a seventh signal; perform, via a fourth preset neural network, de-rate matching processing on a signal obtained by performing resource demapping on the seventh signal, to obtain an output of the fourth preset neural network; determine a third loss function based on the output of the fourth preset neural network and a label of a second preset signal; determine a third gradient based on the third loss function; update the fourth preset neural network based on the third gradient, to obtain the eighth neural network; and send indication information of the third gradient.

This embodiment of this application and the foregoing method embodiment are based on a same concept, and bring same technical effects. For a specific principle, refer to descriptions of the foregoing embodiment. Details are not described again.

An embodiment of this application further provides a communication apparatus 1600.

FIG. 16 is a diagram of a structure of the communication apparatus 1600. The communication apparatus 1600 may be a transmitting end, or may be a chip, a chip system, a processor, or the like that supports the transmitting end in implementing the foregoing method. Alternatively, the communication apparatus 1600 may be a receiving end, or may be a chip, a chip system, a processor, or the like that supports the receiving end in implementing the foregoing method. The apparatus may be configured to implement the method described in the foregoing method embodiment. For details, refer to the descriptions in the foregoing method embodiment.

The communication apparatus 1600 may include one or more processors 1601. The processor 1601 may be a general-purpose processor, a dedicated processor, or the like. For example, the processor 1601 may be a baseband processor, a digital signal processor, an application-specific integrated circuit, a field programmable gate array or another programmable logic device, a discrete gate or a transistor logic device, a discrete hardware component, or a central processing unit (central processing unit, CPU). The baseband processor may be configured to process a communication protocol and communication data. The central processing unit may be configured to: control the communication apparatus (for example, a base station, a baseband chip, a terminal, a terminal chip, a distributed unit (distributed unit, DU), or a central unit (central unit, CU)), execute a software program, and process data of the software program.

Optionally, the communication apparatus 1600 may include one or more memories 1602. Instructions 1604 may be stored in the memory 1602. The instructions may be run on the processor 1601, to enable the communication apparatus 1600 to perform the method described in the foregoing method embodiments. Optionally, the memory 1602 may further store data. The processor 1601 and the memory 1602 may be separately disposed, or may be integrated together.

The memory 1602 may include but is not limited to a non-volatile memory like a hard disk drive (hard disk drive, HDD) or a solid-state drive (solid-state drive, SSD), a random access memory (Random Access Memory, RAM), an erasable programmable read-only memory (Erasable Programmable ROM, EPROM), a ROM, a portable read-only memory (Compact Disc Read-Only Memory, CD-ROM), or the like.

Optionally, the communication apparatus 1600 may further include a transceiver 1605 and an antenna 1606. The transceiver 1605 may be referred to as a transceiver unit, a transceiver machine, a transceiver circuit, or the like, and is configured to implement a transceiver function. The transceiver 1605 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function.

The communication apparatus 1600 is the transmitting end. The processor 1601 is configured to perform S101 and S102 in the signal processing method 100, and is configured to perform S201 in the signal processing method 200. The transceiver 1605 is configured to perform S103 in the signal processing method 100, and is configured to perform S202 in the signal processing method 200.

The communication apparatus 1600 is the receiving end. The processor 1601 is configured to perform S104, S105, and S106 in the signal processing method 100, and is configured to perform S203 in the signal processing method 200. The transceiver 1605 is configured to perform S103 in the signal processing method 100, and is configured to perform S202 in the signal processing method 200.

In another possible design, the processor 1601 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In still another possible design, optionally, the processor 1601 may store instructions 1603, and the instructions 1603 are run on the processor 1601, to enable the communication apparatus 1600 to perform the method described in the foregoing method embodiments. The instructions 1603 may be fixed in the processor 1601. In this case, the processor 1601 may be implemented by hardware.

In still another possible design, the communication apparatus 1600 may include a circuit, and the circuit may implement a sending, receiving, or communication function in the foregoing method embodiments. The processor and the transceiver described in this embodiment of this application may be implemented on an integrated circuit (integrated circuit, IC), an analog IC, a radio frequency integrated circuit (radio frequency integrated circuit, RFIC), a mixed-signal IC, an application-specific integrated circuit (application-specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-channel metal oxide semiconductor (n-Metal-oxide-semiconductor, NMOS), a P-channel metal oxide semiconductor (positive channel metal oxide semiconductor, PMOS), a bipolar junction transistor (Bipolar Junction Transistor, BJT), a bipolar CMOS (BiCMOS), silicon germanium (SiGe), and gallium arsenide (GaAs).

The communication apparatus described in the foregoing embodiments may be a first apparatus. However, the scope of the communication apparatus described in embodiments of this application is not limited thereto, and the structure of the communication apparatus may not be limited by FIG. 16. The communication apparatus may be an independent device or may be a part of a large device. For example, the communication apparatus may be:

(1) an independent integrated circuit IC, a chip, or a chip system or subsystem;
(2) a set that has one or more ICs, where optionally, the IC set may also include a storage component configured to store data and instructions;
(3) an ASIC, for example, a modem (modulator); and
(4) a module that can be embedded in another device.

For a case in which the communication apparatus may be the chip or the chip system, refer to a diagram of a structure of a chip shown in FIG. 17. The chip 1700 shown in FIG. 17 includes a processor 1701 and an interface 1702. There may be one or more processors 1701, and there may be a plurality of interfaces 1702. The processor 1701 may be a logic circuit, and the interface 1702 may be an input/output interface, an input interface, or an output interface. The chip 1700 may further include a memory 1703.

In a design, for a case in which the chip is configured to implement a function of a transmitting end in embodiments of this application:

The processor 1701 is configured to obtain a result of first preprocessing, where the first preprocessing is converting to-be-sent information from a finite field to a complex number field.

The processor 1701 is further configured to perform rate matching processing on the result of the first preprocessing via a first neural network, to obtain a first modulation symbol.

The interface 1702 is configured to send a first signal, where the first signal is obtained by performing resource mapping on the first modulation symbol.

In a design, for a case in which the chip is configured to implement a function of a receiving end in embodiments of this application:

The interface 1702 is configured to receive a first signal.

The processor 1701 is configured to perform resource demapping on the first signal, to obtain a third modulation symbol.

The processor 1701 is further configured to perform de-rate matching processing on the third modulation symbol via a second neural network, to obtain an output of the second neural network.

The processor 1701 is further configured to perform second preprocessing on the output of the second neural network, to obtain to-be-decoded information.

In another design, for a case in which the chip is configured to implement a function of a transmitting end in embodiments of this application:

The processor 1701 is configured to perform rate matching processing on a third signal via a seventh neural network, to obtain a fourth signal.

The interface 1702 is configured to send a fifth signal, where the fifth signal is obtained by performing signal processing on the fourth signal.

In another design, for a case in which the chip is configured to implement a function of a receiving end in embodiments of this application:

The interface 1702 is configured to receive a fifth signal.

The processor 1701 is configured to perform de-rate matching processing on an eighth signal via an eighth neural network, to obtain an output of the eighth neural network, where the eighth signal is obtained by performing signal processing on the fifth signal.

In embodiments of this application, the communication apparatus 1600 and the chip 1700 may further perform the implementations of the communication apparatus 1500. A person skilled in the art may further understand that various illustrative logical blocks (illustrative logical blocks) and steps (steps) that are listed in embodiments of this application may be implemented by using electronic hardware, computer software, or a combination thereof. Whether the functions are implemented by using hardware or software depends on particular applications and a design requirement of an entire system. A person skilled in the art may use various methods to implement the described functions for each particular application, but it should not be considered that the implementation goes beyond the protection scope of embodiments of this application.

This embodiment of this application and the method embodiments shown in the signal processing method 100 and the signal processing method 200 are based on a same concept, and bring same technical effects. For a specific principle, refer to descriptions of the embodiments shown in the signal processing method 100 and the signal processing method 200. Details are not described again.

This application further provides a computer-readable storage medium, configured to store computer software instructions. When the instructions are executed by a communication apparatus, a function in any one of the foregoing method embodiments is implemented.

This application further provides a computer program product, configured to store computer software instructions. When the instructions are executed by a communication apparatus, a function in any one of the foregoing method embodiments is implemented.

This application further provides a computer program. When the computer program is run on a computer, a function in any one of the foregoing method embodiments is implemented.

This application further provides a communication system. The system includes one or more network devices and one or more terminal devices. In another possible design, the system may further include another device that interacts with the network device and the terminal device in the solutions provided in this application.

All or some of the foregoing embodiments may be implemented by using software, hardware, firmware, or any combination thereof. When the software is used to implement embodiments, all or some of embodiments may be implemented in a form of a computer program product. The computer program product includes one or more computer instructions. When the computer instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, an SSD), or the like.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

**1.** A signal processing method, wherein the method comprises:

obtaining a result of first preprocessing, wherein the first preprocessing is converting to-be-sent information from a finite field to a complex number field;
performing rate matching processing on the result of the first preprocessing via a first neural network, to obtain a first modulation symbol; and
sending a first signal, wherein the first signal is obtained by performing resource mapping on the first modulation symbol.

**2.** The method according to claim 1, wherein the performing rate matching processing on the result of the first preprocessing via a first neural network, to obtain a first modulation symbol comprises:

performing rate matching processing on the result of the first preprocessing based on a first parameter via the first neural network, to obtain the first modulation symbol, wherein
the first parameter comprises one or more of spectral efficiency, a channel capacity, a code rate, a signal-to-noise ratio, a code error rate, a signal to interference plus noise ratio, and a block error rate.

**3.** The method according to claim 1 or 2, wherein the method further comprises:

receiving indication information of a first gradient, wherein the first gradient is determined based on a first loss function, the first loss function is determined based on an output of a second neural network and a label of the first signal, and the second neural network is used to perform de-rate matching processing on a signal obtained by performing resource demapping on the first signal; and
updating the first neural network based on the first gradient.

**4.** The method according to any one of claims 1 to 3, wherein the finite field is a binary field, and the to-be-sent information is a bitstream.

**5.** The method according to any one of claims 1 to 4, wherein the first preprocessing is converting a to-be-sent bitstream into a modulation symbol stream.

**6.** The method according to claim 4 or 5, wherein
the result of the first preprocessing is obtained by preprocessing a coded bitstream, and the coded bitstream is obtained by performing channel coding on the to-be-sent information via a third neural network.

**7.** The method according to any one of claims 4 to 6, wherein the result of the first preprocessing is obtained by preprocessing the coded bitstream via a fourth neural network.

**8.** The method according to claim 1, wherein before the performing rate matching processing on the result of the first preprocessing via a first neural network, to obtain a first modulation symbol, the method further comprises:

performing rate matching processing on a first preset training signal via a first preset neural network, to obtain a second modulation symbol;
sending a second signal, wherein the second signal is obtained by performing resource mapping on the second modulation symbol;
receiving indication information of a second gradient, wherein the second gradient is determined based on a second loss function, the second loss function is determined based on an output of a second preset neural network and a label of the first preset training signal, and the second preset neural network is used to perform de-rate matching processing on a signal obtained by performing resource demapping on the second signal; and
updating the first preset neural network based on the second gradient, to obtain the first neural network.

**9.** The method according to claim 8, wherein a puncturing location, a shortening location, or a repetition location at which the first neural network performs rate matching processing on the result of the first preprocessing is determined based on a channel estimation result; or
a puncturing location, a shortening location, or a repetition location at which the first neural network performs rate matching processing on the result of the first preprocessing is determined based on the second gradient.

**10.** The method according to any one of claims 1 to 9, wherein the method further comprises:
sending first indication information, wherein the first indication information indicates the puncturing location, the shortening location, or the repetition location of the rate matching processing.

**11.** The method according to claim 4 or 5, wherein the obtaining a result of first preprocessing comprises:

performing channel coding based on a first quantity of physical resources, a first modulation order, and a mother code length, to obtain first channel code, wherein the first modulation order is determined based on the first parameter, and the first parameter comprises one or more of the spectral efficiency, the channel capacity, the code rate, the signal-to-noise ratio, the code error rate, the signal to interference plus noise ratio, and the block error rate;
determining a second modulation order based on an information bit, a code length of the first channel code, and the first quantity of physical resources, wherein the information bit is determined based on the first quantity of physical resources and the first parameter; and
performing symbol modulation on the first channel code based on the second modulation order, to obtain the result of the first preprocessing.

**12.** A signal processing method, wherein the method comprises:

receiving a first signal;
performing resource demapping on the first signal, to obtain a third modulation symbol;
performing de-rate matching processing on the third modulation symbol via a second neural network, to obtain an output of the second neural network; and
performing second preprocessing on the output of the second neural network, to obtain to-be-decoded information.

**13.** The method according to claim 12, wherein the performing de-rate matching processing on the third modulation symbol via a second neural network, to obtain an output of the second neural network comprises:

performing de-rate matching processing on the third modulation symbol based on a first parameter via the second neural network, to obtain the output of the second neural network, wherein
the first parameter comprises one or more of spectral efficiency, a channel capacity, a code rate, a signal-to-noise ratio, a code error rate, a signal to interference plus noise ratio, and a block error rate.

**14.** The method according to claim 12 or 13, wherein the method further comprises:
performing channel decoding on the to-be-decoded information via a fifth neural network.

**15.** The method according to any one of claims 12 to 14, wherein the to-be-decoded information is obtained by preprocessing the output of the second neural network via a sixth neural network.

**16.** The method according to any one of claims 12 to 15, wherein the method further comprises:

determining a first loss function based on the output of the second neural network and a label of the first signal;
determining a first gradient based on the first loss function;
updating the second neural network based on the first gradient; and
sending indication information of the first gradient.

**17.** The method according to claim 16, wherein the determining a first loss function based on the output of the second neural network and a label of the first signal comprises:

performing channel decoding on the output of the second neural network by using a channel decoder, to obtain an estimated bit or a decoded soft value; and
determining the first loss function based on the estimated bit and the label of the first signal; or
determining the first loss function based on the decoded soft value and the label of the first signal.

**18.** The method according to claim 12, wherein before the receiving a first signal, the method further comprises:

receiving a second signal;
performing, via a second preset neural network, de-rate matching processing on a signal obtained by performing resource demapping on the second signal, to obtain an output of the second preset neural network;
determining a second loss function based on the output of the second preset neural network and a label of a first preset training signal;
determining a second gradient based on the second loss function;
updating the second preset neural network based on the second gradient, to obtain the second neural network; and
sending indication information of the second gradient.

**19.** The method according to any one of claims 12 to 18, wherein the method further comprises:

receiving first indication information, wherein the first indication information indicates a puncturing location, a shortening location, or a repetition location of rate matching processing; and
determining, based on the first indication information, a puncturing padding location, a shortening padding location, or a repetition combining location of the de-rate matching processing performed via the second neural network.

**20.** A communication apparatus, wherein the apparatus comprises:

a processing unit, configured to obtain a result of first preprocessing, wherein the first preprocessing is converting to-be-sent information from a finite field to a complex number field, wherein
the processing unit is further configured to perform rate matching processing on the result of the first preprocessing via a first neural network, to obtain a first modulation symbol; and
a communication unit, configured to send a first signal, wherein the first signal is obtained by performing resource mapping on the first modulation symbol.

**21.** The apparatus according to claim 20, wherein when performing rate matching processing on the result of the first preprocessing via the first neural network, to obtain the first modulation symbol, the processing unit is specifically configured to:

perform rate matching processing on the result of the first preprocessing based on a first parameter via the first neural network, to obtain the first modulation symbol, wherein
the first parameter comprises one or more of spectral efficiency, a channel capacity, a code rate, a signal-to-noise ratio, a code error rate, a signal to interference plus noise ratio, and a block error rate.

**22.** The apparatus according to claim 20 or 21, wherein the finite field is a binary field, and the to-be-sent information is a bitstream.

**23.** The apparatus according to any one of claims 20 to 22, wherein the first preprocessing is converting a to-be-sent bitstream into a modulation symbol stream.

**24.** The apparatus according to claim 22 or 23, wherein the result of the first preprocessing is obtained by preprocessing a coded bitstream, and the coded bitstream is obtained by performing channel coding on the to-be-sent information via a third neural network.

**25.** The apparatus according to any one of claims 22 to 24, wherein the result of the first preprocessing is obtained by preprocessing the coded bitstream via a fourth neural network.

**26.** The apparatus according to claim 20, wherein before performing rate matching processing on the result of the first preprocessing via the first neural network, to obtain the first modulation symbol, the processing unit is further configured to:

perform rate matching processing on a first preset training signal via a first preset neural network, to obtain a second modulation symbol;
send a second signal, wherein the second signal is obtained by performing resource mapping on the second modulation symbol;
receive indication information of a second gradient, wherein the second gradient is determined based on a second loss function, the second loss function is determined based on an output of a second preset neural network and a label of the first preset training signal, and the second preset neural network is used to perform de-rate matching processing on a signal obtained by performing resource demapping on the second signal; and
update the first preset neural network based on the second gradient, to obtain the first neural network.

**27.** A communication apparatus, wherein the apparatus comprises:

a communication unit, configured to receive a first signal; and

a processing unit, configured to perform resource demapping on the first signal, to obtain a third modulation symbol, wherein

the processing unit is further configured to perform de-rate matching processing on the third modulation symbol via a second neural network, to obtain an output of the second neural network; and

the processing unit is further configured to perform second preprocessing on the output of the second neural network, to obtain to-be-decoded information.

**28.** The apparatus according to claim 27, wherein when performing de-rate matching processing on the third modulation symbol via the second neural network, to obtain the output of the second neural network, the processing unit is specifically configured to:

perform de-rate matching processing on the third modulation symbol based on a first parameter via the second neural network, to obtain the output of the second neural network, wherein

the first parameter comprises one or more of spectral efficiency, a channel capacity, a code rate, a signal-to-noise ratio, a code error rate, a signal to interference plus noise ratio, and a block error rate.

**29.** The apparatus according to claim 27 or 28, wherein the processing unit is further configured to:
perform channel decoding on the to-be-decoded information via a fifth neural network.

**30.** The apparatus according to any one of claims 27 to 29, wherein the to-be-decoded information is obtained by preprocessing the output of the second neural network via a sixth neural network.

**31.** The apparatus according to claim 27, wherein before the communication unit receives the first signal, the processing unit is further configured to:

receive a second signal;

perform, via a second preset neural network, de-rate matching processing on a signal obtained by performing resource demapping on the second signal, to obtain an output of the second preset neural network;

determine a second loss function based on the output of the second preset neural network and a label of a first preset training signal;

determine a second gradient based on the second loss function;

update the second preset neural network based on the second gradient, to obtain the second neural network; and

send indication information of the second gradient.

**32.** An apparatus, comprising a processor, wherein the processor is configured to run a program, to enable the apparatus to implement the method according to any one of claims 1 to 11, or implement the method according to any one of claims 12 to 19.

**33.** A computer-readable storage medium, wherein the computer-readable storage medium is configured to store instructions, and when the instructions are run on a computer, the method according to any one of claims 1 to 11 is performed, or the method according to any one of claims 12 to 19 is performed.

**34.** A computer program product comprising instructions, wherein when the computer program product runs on a computer, the method according to any one of claims 1 to 11 is performed, or the method according to any one of claims 12 to 19 is performed.

Network device
Terminal device
Terminal device

FIG. 1

Source coding Source coding
Channel coding Channel coding
Coding Coding
Modulation Modulation
Modulation Modulation
Layer mapping & precoding Layer mapping and precoding
Mapping & detection Mapping and detection
Waveform signal Waveform signal
Waveform Waveform
DAC Digital-to-analog conversion
RF Radio frequency
RF Radio frequency
Source decoding Source decoding
Channel decoding Channel decoding
Demodulation Demodulation
Detection Detection
Timing/Carrier recovery Time domain transform/ Carrier recovery
ADC Analog-to-digital conversion
RF Radio frequency

FIG. 2

Transmitting end
Bitstream
Channel coding
Rate matching
Modulation
Resource mapping
Waveform
Bit-level processing
Channel
Estimated bit
Channel decoding
De-rate matching
Demodulation
Resource demapping
De-waveform
Receiving end

FIG. 3

Signal processing method 100
Transmitting end
Receiving end
S101: Obtain a result of first preprocessing, where the first preprocessing is converting to-be-sent information from a finite field to a complex number field
S102: Perform rate matching processing on the result of the first preprocessing via a first neural network, to obtain a first modulation symbol
S103: First signal, where the first signal is obtained by performing resource mapping on the first modulation symbol
S104: Perform resource demapping on the first signal, to obtain a third modulation symbol
S105: Perform de-rate matching processing on the third modulation symbol via a second neural network, to obtain an output of the second neural network
S106: Perform second preprocessing on the output of the second neural network, to obtain to-be-decoded information

FIG. 4

To-be-sent bitstream
Third neural network
Coded bitstream
Preprocessing
Result of first preprocessing

FIG. 5a

To-be-sent bitstream
Channel coding
Coded bitstream
Fourth neural network
Result of first preprocessing

FIG. 5b

To-be-sent bitstream
Third neural network
Coded bitstream
Fourth neural network
Result of first preprocessing

FIG. 5c

Transmitting end
To-be-sent information
Neural network #a
Result of first preprocessing
First neural network
First modulation symbol #a
Resource mapping
First signal
Channel
First signal
Resource demapping
Third modulation symbol #a
Second neural network
Output of the second neural network
Neural network #e
Estimated information
Receiving end

FIG. 6a

Transmitting end
To-be-sent information
Channel coding
Coded information
Neural network #b
First modulation symbol #b
Resource mapping
First signal
Channel
Estimated information
Channel decoding
To-be-decoded information
Neural network #f
Third modulation symbol #b
Resource demapping
First signal
Receiving end

FIG. 6b

Transmitting end
To-be-sent information
Neural network #c
First modulation symbol #c
Resource mapping
First signal
Channel
Estimated information
Neural network #g
Third modulation symbol #c
Resource demapping
First signal
Receiving end

FIG. 6c

Transmitting end
To-be-sent bitstream
Channel coding
Modulation
Rate matching
Resource mapping
Waveform
Symbol-level processing
Channel
Estimated bit
Channel decoding
Demodulation
De-rate matching
Resource demapping
De-waveform
Receiving end

FIG. 7

First neural network
First shared linear mapping layer
Shortening
Interaction layer
Second shared linear mapping layer
Puncturing
Shortening
Repetition
Channel
Second neural network
First shared linear mapping layer
Puncturing padding
Shortening padding
Repetition combining
Interaction layer
Second shared linear mapping layer

FIG. 8

Coded bit
Symbol modulation
First neural network
Channel
Second neural network
Loss function

FIG. 9a

Bitstream
Channel coding
Symbol modulation
First neural network
Channel
Second neural network
Channel decoding
Loss function

FIG. 9b

Loss function
Sixth neural network
Second neural network
Channel
First neural network
Fourth neural network
Third neural network
Bitstream

FIG. 9c

First preset signal
First preset neural network
Channel
Second preset neural network
Loss function

FIG. 9d

Resource patch
n_L
n_F
n_T
D
D
D
D
$s_0$
$s_1$
$s_2$
$s_3$
$s_4$
$s_5$

FIG. 10

Channel coding
Symbol modulation
Resource patch mapping
First neural network
Resource mapping
Waveform generation
Channel coding
Resource patch mapping
First neural network
Resource mapping
Waveform generation
Resource patch mapping
First neural network
Resource mapping
Waveform generation

FIG. 11a

FIG. 11b

FIG. 11c

Code rate=0.3
$10^0$
$10^{-1}$
$10^{-2}$
$10^{-3}$
$10^{-4}$
Block error rate BLER
N4032K1209
N3532K1209
N3232K1209
N2824K1209
pr 0
pr 0.2
pr 0.3
pr 0.1
R=0.3
R=0.33
R=0.38
R=0.43
2
2.5
3
3.5
4
4.5
5
5.5
6
Signal-to-noise ratio SNR

FIG. 12a

Code rate=0.5
Block error rate BLER
$10^0$
$10^{-1}$
$10^{-2}$
$10^{-3}$
$10^{-4}$
N4032K2016
N3532K2016
N3232K2016
N2824K2016
pr 0
pr 0.3
pr 0.2
pr 0.1
R=0.5
R=0.56
R=0.63
R=0.7
5
5.5
6
6.5
7
7.5
8
8.5
9
9.5
10
Signal-to-noise ratio SNR

FIG. 12b

Code rate=0.8
Block error rate BLER
$10^0$
$10^{-1}$
$10^{-2}$
$10^{-3}$
$10^{-4}$
R=0.8
R=0.89
N4032K3226
N3632K3226
pr 0
pr 0.1
10
10.5
11
11.5
12
12.5
13
13.5
Signal-to-noise ratio SNR

FIG. 12c

Signal processing method 200
Transmitting end
Receiving end
S201: Perform rate matching processing on a third signal via a seventh neural network, to obtain a fourth signal
S202: Fifth signal, where the fifth signal is obtained by performing signal processing on the fourth signal
S203: Perform de-rate matching processing on an eighth signal via an eighth neural network, to obtain an output of the eighth neural network, where the eighth signal is obtained by performing signal processing on the fifth signal

FIG. 13

Transmitting end
To-be-sent information
Seventh neural network
Fourth signal
Channel coding
Symbol modulation
Resource mapping
Fifth signal
Channel
Fifth signal
Resource demapping
Demodulation
Channel decoding
Eighth signal
Eighth neural network
Estimated information
Receiving end

FIG. 14a

Transmitting end
To-be-sent information
Channel coding
Coded information
Seventh neural network
Fourth signal
Symbol modulation
Resource mapping
Fifth signal
Channel
Fifth signal
Resource demapping
Demodulation
Eighth signal
Eighth neural network
Output of the eighth neural network
Channel decoding
Estimated information
Receiving end

FIG. 14b

Transmitting end
To-be-sent information
Channel coding
Symbol modulation
Modulation symbol
Seventh neural network
Fourth signal
Resource mapping
Fifth signal
Channel
Fifth signal
Resource demapping
Eighth signal
Eighth neural network
Output of the eighth neural network
Demodulation
Channel decoding
Estimated information
Receiving end

FIG. 14c

Communication apparatus 1500
1501
Communication unit
1502
Processing unit
1503
Storage unit

FIG. 15

Communication apparatus 1600
1601
1602
Processor
1603
Memory
1604
Instruction
Instruction
1605
1606
Transceiver
Antenna

FIG. 16

1703
1701
1700
Memory
Processor
Chip
1702
Interface

FIG. 17

**INTERNATIONAL SEARCH REPORT**

International application No. **PCT/CN2023/095798**

**A. CLASSIFICATION OF SUBJECT MATTER**

H04L1/00(2006.01)i

According to International Patent Classification (IPC) or to both national classification and IPC

**B. FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

CNABS, CNTXT, VEN, DWPI, ENTXT, 3GPP: 发送, 传输, 传送, 传递, 转发, 数据, 信息, 比特, 转换, 变换, 映射, 有限域, 二元域, 复数域, 神经网络, 速率, 速度, 匹配, 适配, 调制, 梯度, 损失函数, 频谱效率, 信道容量, 码率, 信噪比, 误码率, 信干噪比, 误块率, 打孔, 缩短, 重复, 物理资源; transmit, transfer, forward, data, information, bits, converts, transforms, mapping, finite field, binary domain, complex domain, neural networks, speed, matching, adaptation, modulation, gradient, loss function, spectral efficiency, channel capacity, code rate, signal to noise ratio, bit error rate, block error rate, puncturing, shortening, repetition, physical resource

**C. DOCUMENTS CONSIDERED TO BE RELEVANT**

| Category* | Citation of document, with indication, where appropriate, of the relevant passages | Relevant to claim No. |
|---|---|---|
| X | CN 114337911 A (HUAWEI TECHNOLOGIES CO., LTD.) 12 April 2022 (2022-04-12) see description, paragraphs [0006]-[0055], and figures 5 and 8 | 1-34 |
| A | CN 110460402 A (HARBIN ENGINEERING UNIVERSITY) 15 November 2019 (2019-11-15) entire document | 1-34 |
| A | CN 111277511 A (SHENZHEN ONECONNECT SMART TECHNOLOGY CO., LTD.) 12 June 2020 (2020-06-12) entire document | 1-34 |
| A | US 2021119848 A1 (NVIDIA CORPORATION) 22 April 2021 (2021-04-22) entire document | 1-34 |
| A | US 2022123853 A1 (SAMSUNG ELECTRONICS CO., LTD.) 21 April 2022 (2022-04-21) entire document | 1-34 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **07 September 2023** | **10 September 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | Telephone No. |

Form PCT/ISA/210 (second sheet) (July 2022)

**INTERNATIONAL SEARCH REPORT**

International application No.
**PCT/CN2023/095798**

**C. DOCUMENTS CONSIDERED TO BE RELEVANT**

| Category* | Citation of document, with indication, where appropriate, of the relevant passages | Relevant to claim No. |
|---|---|---|
| A | WO 2020092391 A1 (THE UNIVERSITY OF TEXAS SYSTEM) 07 May 2020 (2020-05-07) entire document | 1-34 |

Form PCT/ISA/210 (second sheet) (July 2022)

**INTERNATIONAL SEARCH REPORT**
**Information on patent family members**

International application No.
**PCT/CN2023/095798**

| Patent document cited in search report | | | Publication date (day/month/year) | Patent family member(s) | | | Publication date (day/month/year) |
|---|---|---|---|---|---|---|---|
| CN | 114337911 | A | 12 April 2022 | WO | 2022068757 | A1 | 07 April 2022 |
| | | | | EP | 4210252 | A1 | 12 July 2023 |
| CN | 110460402 | A | 15 November 2019 | None | | | |
| CN | 111277511 | A | 12 June 2020 | WO | 2021142971 | A1 | 22 July 2021 |
| US | 2021119848 | A1 | 22 April 2021 | KR | 20220078684 | A | 10 June 2022 |
| | | | | WO | 2021080784 | A1 | 29 April 2021 |
| | | | | AU | 2020371527 | A1 | 09 June 2022 |
| | | | | JP | 2022553311 | A | 22 December 2022 |
| | | | | GB | 202205259 | D0 | 25 May 2022 |
| | | | | GB | 2603695 | A | 10 August 2022 |
| | | | | DE | 112020005097 | T5 | 18 August 2022 |
| US | 2022123853 | A1 | 21 April 2022 | WO | 2022080944 | A1 | 21 April 2022 |
| | | | | IN | 202041045006 | A | 22 April 2022 |
| WO | 2020092391 | A1 | 07 May 2020 | US | 2022014398 | A1 | 13 January 2022 |
| | | | | US | 11575544 | B2 | 07 February 2023 |
| | | | | US | 2023261910 | A1 | 17 August 2023 |

Form PCT/ISA/210 (patent family annex) (July 2022)

## REFERENCES CITED IN THE DESCRIPTION

*This list of references cited by the applicant is for the reader’s convenience only. It does not form part of the European patent document. Even though great care has been taken in compiling the references, errors or omissions cannot be excluded and the EPO disclaims all liability in this regard.*

### Patent documents cited in the description


- CN 202210609783